# EUROPÄISCHE PATENTSCHRIFT

(11) **EP 1 719 407 B1**
(45) Veröffentlichungstag und Bekanntmachung des Hinweises auf die Patenterteilung: **18.06.2008**
(21) Anmeldenummer: 06113222.1
(22) Anmeldetag: 27.04.2006
(51) Int. Cl.: A01K 39/012

(54) **Futtertrog**
Feeding through
Mangeoire

(30) Priorität: 03.05.2005 DE 102005020670
(43) Veröffentlichungstag der Anmeldung: 08.11.2006
(73) Patentinhaber: LAE-Anlagenbau GmbH, 27472 Cuxhaven (DE)
(72) Erfinder:
(74) Vertreter: Solf, Alexander

(56) Entgegenhaltungen:
- EP-A- 0 421 553
- DE-C1- 10 164 100
- FR-A- 2 791 522
- US-A- 5 462 017

## Beschreibung

Die vorliegende Erfindung betrifft einen Futtertrog für Geflügel zur Verwendung in Verbindung mit einem Röhren-Fütterungssystem, der für die Aufzucht von Geflügel geeignet ist.

Bei der Geflügelfütterung wird dem Geflügel üblicherweise das Futter in Bodenschalen angeboten, in die das Futter über ein Fallrohr, das an ein Förderrohr eines Röhrenfütterungssystems angeschlossen ist, eingefüllt wird. Um dem Geflügel immer möglichst frisches Futter bereit zu stellen, ist es dabei üblich, den Futterpegel in den Bodenschalen relativ gering zu halten und häufig neues Futter nachzufüllen. Um das Verschütten des Futters durch das Geflügel zu verhindern, besitzen derartige Bodenschalen einen relativ hohen Umfangsrand. Dies ist bei der Aufzucht von Geflügel allerdings problematisch, da der hohe Umfangsrand für junge Küken, insbesondere für Eintagsküken zu hoch ist, um darüber an das weit unten liegende Futter gelangen zu können. Um dem jungen Geflügel das Futter bequem und leicht zugänglich zu machen, muss der Pegelstand des Futters deutlich erhöht werden. Dazu ist es bekannt, Futtertröge mit zwei unterschiedlich hoch angeordneten Futterzuführöffnungen zu verwenden, die abwechselnd geöffnet und geschlossen werden können.

Ein derartiger Futtertrog ist zum Beispiel in der DE 690 02 574 T2 beschrieben. Dieser Futtertrog besteht im Wesentlichen aus einer tellerförmigen Bodenschale mit einer aufrechtstehenden Umfangswandung und einer Bodenwandung, die mittig bzw. zentral ein nach oben gerichtetes kegelförmiges Mittelteil aufweist, und einem oberhalb der Bodenschale angeordneten Fallrohr, durch das das Futter zur Bodenschale geführt wird und das an seinem oberen Ende an ein Förderrohr eines Röhrenfütterungssystems angeschlossen ist.

Das Fallrohr gemäß der DE 690 02 574 T2 weist einen oberen zylinderrohrförmigen Abschnitt, einen mittleren konischen Abschnitt und einen unteren wieder zylinderrohrförmigen Abschnitt auf. Des Weiteren ist das Fallrohr zur Bodenschale vertikal um einen einstellbaren Betrag verschieblich angeordnet, so dass zwischen dem mittleren im Wesentlichen konischen Abschnitt und dem kegelförmigen Mittelteil der Bodenschale ein Ringspalt variabler Größe und zwischen dem unteren Ende des Fallrohres und der Bodenwandung der Bodenschale eine erste, untere Futterzuführöffnung mit einstellbarem Öffnungsquerschnitt gebildet werden, so dass das Futter von dem Fallrohr durch den Ringspalt und die untere Futterzuführöffnung in die Bodenschale gelangen kann.

Des Weiteren weist das Fallrohr am unteren Ende seines oberen zylinderförmigen Abschnitts mehrere schlitzförmige um den Umfang des Fallrohres gleichmäßig verteilte Aussparungen auf, die als zweite, obere Futterzuführöffnungen dienen.

Außerdem weist der Futtertrog gemäß der DE 690 02 574 T2 eine zylinderrohrförmige Führungshülse mit Außengewinde, in der das Fallrohr vertikal beweglich geführt wird und ein Gitter aus mehreren gekrümmten Stäben auf, die sich von einem Schnappring, der an der Umfangswandung der Bodenschale verrastet ist, radial bogenartig nach oben erstrecken und in einen Gitterring münden. Der Gitterring ist um die Führungshülse herum angeordnet und weist ein dem Außengewinde der Führungshülse entsprechendes Innengewinde auf, so dass die Führungshülse in der Höhe relativ zur Bodenschale einstellbar ist. Das Gitter dient gemäß der DE 690 02 574 T2 zum einen zur Lagerung der Führungshülse und somit auch des Fallrohres und zum anderen soll es verhindern, dass ausgewachsenes Geflügel im Futtertrog umhergeht und das Futter verscharrt und mit Kot verunreinigt.

Zur Fütterung von Eintagsküken wird der Futtertrog gemäß der DE 690 02 574 T2 in eine untere Stellung des Fallrohres gebracht, in der das Fallrohr derart in der Führungshülse nach unten verschoben ist, dass die zweiten Futterzuführöffnungen vollständig unterhalb eines unteren Randes der Führungshülse liegen und somit von dieser frei gegeben werden. Das Futter fließt in dieser Stellung aus den zweiten Futterzuführöffnungen über eine Oberseite des konischen Abschnitts des Fallrohres in die Bodenschale hinein. Durch die höher gelegenen zweiten Futterzuführöffnungen wird ein so hoher Futterpegel in der Bodenschale erzielt, dass das Futter auch für junges Geflügel leicht und bequem zugänglich ist.

Damit in dieser unteren Stellung des Fallrohres kein Futter in den zwischen dem mittleren im Wesentlichen konischen Abschnitt und dem kegelförmigen Mittelteil der Bodenschale gebildeten Ringspalt gelangt und dort altert, sind gemäß der DE 690 02 574 T2 die geometrischen Abmessungen des Fallrohres und der Bodenschale so gewählt, dass zum einen das Fallrohr in einem Bereich knapp unter den zweiten Futterzuführöffnungen auf dem kegelförmigen Mittelteil der Bodenwandung der Bodenschale aufsitzt und über den gesamten Umfang abdichtet und zum anderen das Fallrohr zusätzlich mit dem Ende des unteren zylinderrohrförmigen Abschnitts des Fallrohrs unten auf der Bodenwandung aufsitzt und zusätzlich von unten abdichtet.

Zur Fütterung von älterem Geflügel wird das Fallrohr gemäß der DE 690 02 574 T2 aus der unteren in eine obere Stellung angehoben, so dass das Fallrohr nicht mehr auf der Bodenwandung aufsitzt und die untere Futterzuführöffnung geöffnet wird. Gleichzeitig gleitet das Fallrohr soweit in der Führungshülse vertikal nach oben, bis die zweiten Futterzuführöffnungen vollständig innerhalb der Führungshülse liegen und von dieser verschlossen werden. Als oberer Anschlag dient dabei der Übergangsbereich des oberen zylinder-rohrförmigen Abschnitts und des konischen Abschnitts des Fallrohres mit dem unteren Ende der Führungshülse.

In dieser unteren Stellung des Fallrohres fließt das Futter ausschließlich durch den Ringspalt und die untere Futterzuführöffnung in die Bodenschale, wodurch der Futterpegel und somit die angebotene Futtermenge deutlich niedriger sind, so dass das Futter eine kürzere Verweilzeit in der Bodenschale hat und dem älteren und ausgewachsenen Geflügel immer frisches Futter angeboten wird.

Allerdings ist bei dem beschriebenen Futtertrog von Nachteil, dass das Fallrohr beim Wechseln von der unteren in die obere Stellung gegen den Druck des Futters, das sich auf der Oberseite des konischen Fallrohrabschnitts befindet, angehoben werden muss. Ruckartiges Anheben kann zudem zu Futterverlusten führen, da das Futter dabei seitlich aus der Fütterungsvorrichtung austritt.

Beim Wechseln von der oberen in die untere Stellung, muss das sich in der Bodenschale befindliche Futter, damit das Fallrohr an beiden Stellen dichtend auf der Bodenwandung aufsitzen kann, zunächst verdrängt werden, was wiederum nur mit einem nicht unerheblichen Kraftaufwand möglich ist.

Des Weiteren weist der Futtertrog mit dem Gitter und der Führungshülse einen relativ sperrigen, aufwändigen Aufbau auf und ist aufgrund der vielen Einzelbauteile relativ kostenintensiv in der Herstellung und erfordert einen erheblichen Montageaufwand.

Zudem werden auch schon die Küken durch die Gitterkonstruktion instinktiv davon abgehalten, in die Bodenschale einzusteigen, was zu Beginn der Aufzucht eigentlich wünschenswert ist, da die Küken so noch mehr Futter zu sich nehmen. Und das Aussteigen aus der Bodenschale ist dadurch ebenfalls erschwert.

Ein weiterer Futtertrog ist aus der DE 101 64 100 C1 bekannt. Dieser Futtertrog weist eine Bodenschale, die eine Bodenwandung mit einem kegelförmig nach oben gerichteten und auf eine vertikale Futtertrogmittelachse zulaufenden Rutschkegel besitzt, auf. Zudem weist der Futtertrog ein mittig zentral über der Bodenschale und vertikal zu dieser verschieblich angeordnetes Fallrohr auf, das an einem unteren Fallrohrfutterzuführbereich obere Futterzuführöffnungen aufweist. Unter den oberen Futterzuführöffnungen besitzt das Fallrohr ein im wesentlichen ringförmiges Schließsegment. Außerdem weist der Futtertrog der DE 101 64 100 C1 einen mittig zentral über der Bodenschale angeordneten und mit der Bodenschale vertikal verschieblich verbundenen Trogtrichter mit einem Trichterführungsrohr auf. An das Trichterführungsrohr schließt sich vertikal nach unten ein konisch nach außen gerichteter Futterleitkegel an, wobei in dem Trichterführungsrohr Futterzuführfenster vorgesehen sind und zwischen einer Futterleitkegelunterkante und der Bodenwandung der Bodenschale eine untere Futterzuführöffnung gebildet wird. Das Fallrohr ist innerhalb des Trogtrichters angeordnet und steht vertikal verschieblich mit diesem in Verbindung. Des weiteren weist der Futtertrog ein außen liegendes Gitter aus speichenartig verlaufenden Gitterstäben auf. Dabei hängt die Bodenschale mittels der Gitterstäbe an dem Trogtrichter, wobei der Trogtrichter begrenzt vertikal verschieblich mit dem Gitter in Verbindung steht. In einer oberen Stellung des Fallrohres bezüglich des Trogtrichters ist die untere Futterzuführöffnung geöffnet und das Schließsegment verschließt die Futterzuführfenster. In einer unteren Stellung des Fallrohres bezüglich des Trogtrichters sind die oberen Futterzuführöffnungen und Futterzuführfenster sich gegenüberliegend angeordnet, so dass sie Futterdurchgänge bilden und das Futter zusätzlich zur unteren Futterzuführöffnung durch die Futterdurchgänge in die Futterschale gelangt. In dieser Stellung ist das Futterniveau in der Futterschale wesentlich höher, so dass auch Jungtiere an das nunmehr in der Futterschale höher stehende Futter gelangen können.

Aufgabe der vorliegenden Erfindung ist die Bereitstellung eines für die Aufzucht von Geflügel geeigneten Futtertroges, der einfach aufgebaut und zu montieren ist, kostengünstig hergestellt werden kann, bei dem zum Anheben und Absenken des Fallrohres ein geringer Kraftaufwand erforderlich ist und der ein problemloses Ein- und Aussteigen in bzw. aus der Bodenschale für Küken ermöglicht und diese dazu animiert.

Diese Aufgabe wird durch die Merkmale des Anspruchs 1 gelöst. Vorteilhafte Weiterbildungen der Erfindung werden in den Unteransprüchen gekennzeichnet.

Im Folgenden wird die Erfindung anhand der Zeichnung beispielhaft näher erläutert.

Es zeigen:
Fig.1: eine perspektivische Ansicht eines erfindungsgemäßen Futtertroges
Fig.2: eine perspektivische Ansicht von der Seite einer Bodenschale des erfindungsgemäßen Futtertroges

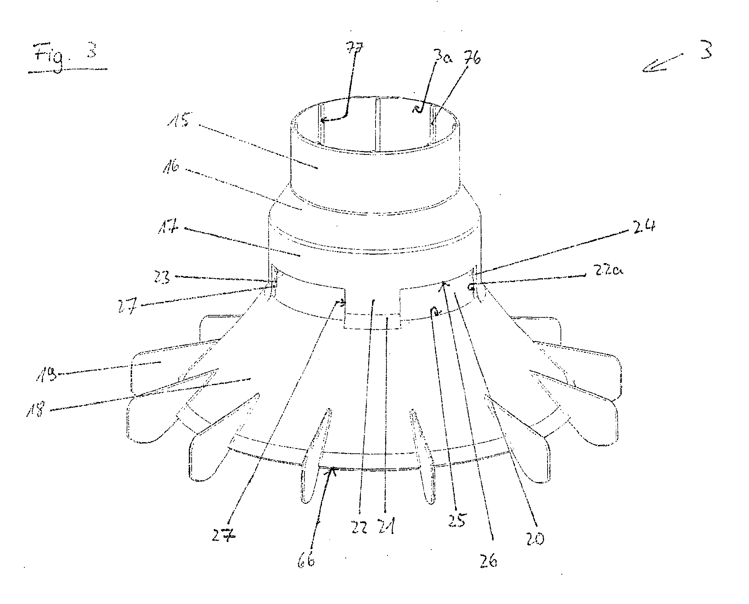

Fig.3: eine perspektivische Ansicht von der Seite eines Trogtrichters des erfindungsgemäßen Futtertroges (erste Ausführungsform)
Fig.4: eine perspektivische Ansicht von der Seite eines Fallrohres des erfindungsgemäßen Futtertroges (erste Ausführungsform)
Fig.5: eine perspektivische Ansicht von der Seite eines Raumstabwerkes des erfindungsgemäßen Futtertroges zur Verbindung des Trogtrichters mit der Bodenschale (erste Ausführungsform)
Fig.6: einen Längsschnitt durch den erfindungsgemäßen Futtertrog (erste Ausführungsform) in einer oberen Stellung des Fallrohres bezüglich des Trogtrichters entlang einer eine vertikale Futtertrogmittelachse enthaltenden und zu einer Förderrohrmittelachse abgewinkelten Ebene
Fig.7: einen Längsschnitt durch den erfindungsgemäßen Futtertrog (erste Ausführungsform) in der oberen Stellung des Fallrohres entlang einer die Futtertrogmittelachse und die Förderrohrmittelachse enthaltenden Ebene
Fig.8: einen Längsschnitt durch den erfindungsgemäßen Futtertrog (erste Ausführungsform) in einer unteren Stellung des Fallrohres bezüglich des Trogtrichters entlang einer die Futtertrogmittelachse enthaltenden und zu der Förderrohrmittelachse senkrechten Ebene
Fig.9: einen Längsschnitt durch den erfindungsgemäßen Futtertrog (erste Ausführungsform) in der unteren Stellung des Fallrohres entlang der die Futtertrogmittelachse und die Förderrohrmittelachse enthaltenden Ebene
Fig.10: eine perspektivische Ansicht oben von der Seite des Trogtrichters (zweite Ausführungsform)
Fig.11: eine perspektivische Ansicht von der Seite des Fallrohres (zweite Ausführungsform)
Fig.12: eine perspektivische Ansicht oben von der Seite des Raumstabwerkes (zweite Ausführungsform)
Fig.13: einen Längsschnitt durch den erfindungsgemäßen Futtertrog (zweite Ausführungsform) in der oberen Stellung des Fallrohres entlang der die Futtertrogmittelachse enthaltenden und zu der Förderrohrmittelachse senkrechten Ebene
Fig.14: einen Längsschnitt durch den erfindungsgemäßen Futtertrog (zweite Ausführungsform) in der oberen Stellung des Fallrohres entlang der die Futtertrogmittelachse und die Förderrohrmittelachse enthaltenden Ebene
Fig.15: einen Längsschnitt durch den erfindungsgemäßen Futtertrog (zweite Ausführungsform) in der unteren Stellung des Fallrohres entlang der die Futtertrogmittelachse enthaltenden und zu der Förderrohrmittelachse senkrechten Ebene
Fig.16: einen Längsschnitt durch den erfindungsgemäßen Futtertrog (zweite Ausführungsform) in der unteren Stellung des Fallrohres entlang der die Futtertrogmittelachse und die Förderrohrmittelachse enthaltenden Ebene

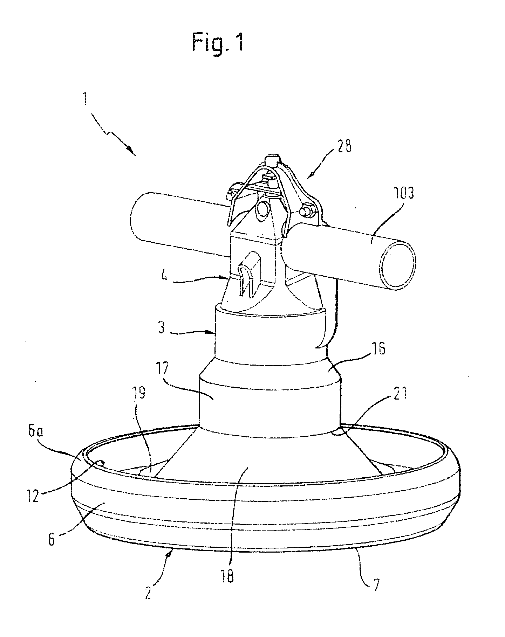

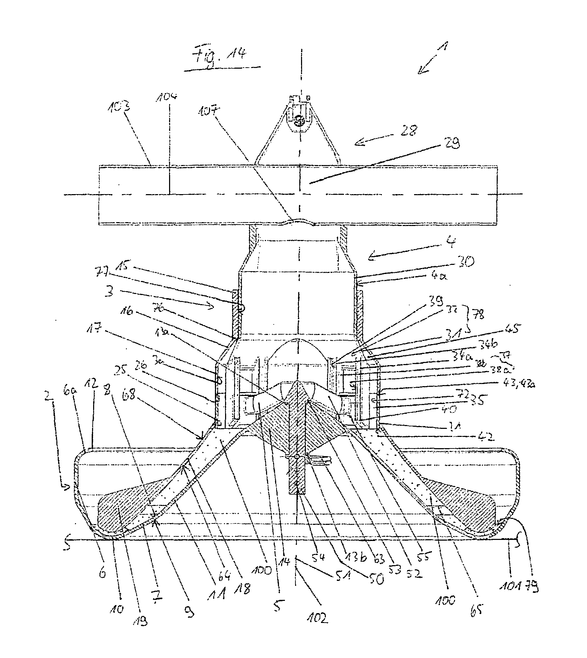

Der erfindungsgemäße Futtertrog 1 weist im Wesentlichen eine tellerförmige Bodenschale 2, einen mittig bzw. zentral über der Bodenschale 2 angeordneten Trogtrichter 3, ein innerhalb des Trogtrichters 3 und ebenfalls mittig bzw. zentral über der Bodenschale 2 angeordnetes Fallrohr 4 und ein innerhalb des Trogtrichters 3 angeordnetes Raum- bzw. Verbindungsstabwerk 5 auf (Fig.1, 6-9 und 13-16).

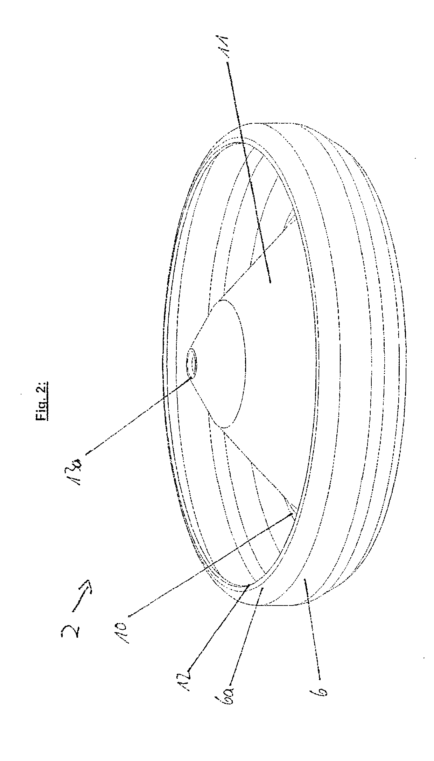

Die Bodenschale 2 (Fig.1,2,6-9 und 13-16) dient zur Aufnahme von Futter 100 und besteht im Wesentlichen aus einer aufrechtstehenden, im Wesentlichen vertikal nach oben gerichteten Umfangswandung 6 mit einem oberen Umfangsrand 6a und aus einer Bodenwandung 7 mit einer Bodenwandungsober- bzw. -innenfläche 8 und einer Bodenwandungsunter- bzw. -außenfläche 9. Außerdem weist die Bodenwandung 7 eine konkave Bodenwandungsrinne bzw. Futtermulde 10 auf, über die die Bodenwandung 7 von der Umfangswandung 6 in einen konisch bzw. kegelförmig nach oben gerichteten und auf eine vertikale, zentrale Futtertrogmittelachse 102 des gesamten Futtertroges 1 zulaufenden Rutschkegel 11 übergeht.

Bei der Fütterung liegt der Futtertrog 1 zweckmäßigerweise mit der konkaven Bodenwandungsrinne 10 auf einem Erd- bzw. Hallenboden 101 auf.

Um das Verschütten des Futters 100 durch das Geflügel zu verhindern, ist der Umfangsrand 6a zweckmäßigerweise in Bezug zur Umfangswandung 6 nach innen in Richtung Futtertrogmittelachse 102 eingezogen. Durch den Umfangsrand 6a wird außerdem eine Fresskante 12 definiert und festgelegt, die bezogen auf den Hallenboden 101 vorzugsweise eine Höhe von 40 bis 80 mm, bevorzugt von 50 bis 75 mm hat.

Des Weiteren ist die Bodenwandung 7 am oberen Ende des Rutschkegels 11 nach innen unten eingestülpt, so dass eine vertikal nach unten und zweckmäßigerweise konzentrisch zur Futtertrogmittelachse 102 ausgerichtete Aufnahmehülse 13 mit einem oberen Anlaufbund 13a an der oberen Öffnung und einem unteren Anlaufbund 13b an der unteren Öffnung gebildet wird. Die Aufnahmehülse 13 ist vorzugsweise einstückig mit dem Rutschkegel 11 verbunden. Zweckmäßigerweise sind zur Stabilisierung der Verbindung von Aufnahmehülse 13 und Rutschkegel 11 zusätzlich Versteifungsrippen 14 zwischen der Bodenwandungsunterfläche 9 und einer Hülsenaußenwandung 74 vorgesehen, wobei die Versteifungsrippen 14 vorzugsweise ebenfalls einstückig mit der Aufnahmehülse 13 und dem Rutschkegel 11 verbunden sind.

Des Weiteren besteht die Bodenschale 2 vorzugsweise aus Kunststoff, bevorzugt einem Hartkunststoff, wie zum Beispiel High-Density-Polyethylen (HDPE) und/oder Polyethylen (PE), und wird vorzugsweise durch Gießen, bevorzugt Druckgießen oder Spritzgießen hergestellt.

Der Trogtrichter 3 des erfindungsgemäßen Futtertroges 1 (Fig.1,6-9) weist nach einer ersten beispielhaften Ausführungsform ein oberes zylindrisches Trichterführungsrohr 15, einen sich daran in vertikaler Richtung nach unten anschließenden oberen, konisch radial nach außen gerichteten, Trichterübergangskegel 16, ein sich daran anschließendes unteres zylindrisches Trichterführungsrohr 17 und einen sich daran anschließenden unteren, konisch radial nach außen gerichteten, Futterleitkegel 18 auf, an dessen unterem Ende, um den gesamten Umfang vorzugsweise gleichmäßig verteilt, an sich bekannte Scharrflügel 19 angeordnet sind, die verhindern, dass das ausgewachsene Geflügel bei niedrigem Pegelstand des Futters 100 in die Bodenschale 2 einsteigt und das Futter 100 verscharrt und durch Kot etc. verunreinigt. Vorzugsweise sind dabei 9 bis 15, bevorzugt 11 bis 13 Scharrflügel 19 an dem Futterleitkegel 18 vorgesehen.

Des Weiteren sind an einer Trichterinnenwandung 3b im Bereich des oberen Trichterführungsrohres 15 vertikal ausgerichtete und in Umfangsrichtung gleichmäßig verteilte Führungsstege 76 mit Führungssteginnenwandungen 77 angeordnet.

Erfindungsgemäß sind zudem in dem unteren Trichterführungsrohr 17 sich in Umfangsrichtung erstreckende Schlitze als Futterzuführfenster 20 vorgesehen. Diese Futterzuführfenster 20 weisen jeweils eine sich in Umfangsrichtung und vertikal erstreckende Fensterunterkante 25, deren Radius dem Außenradius des unteren Trichterführungsrohres 17 entspricht, eine sich ebenfalls in Umfangsrichtung und horizontal erstreckende Fensteroberkante 26 und jeweils zwei vertikal und radial nach innen ausgerichtete Fensterseitenführungskanten 27 auf, wobei die Fensterunterkanten 25 zweckmäßigerweise im Bereich eines Übergangsbereichs 21 vom unteren Trichterführungsrohr 17 zum Futterleitkegel 18 angeordnet sind. Die Fensteroberkanten 26 sind vorzugsweise um 17 bis 23 mm, bevorzugt 19 bis 21 mm vertikal von den Fensterunterkanten 25 beabstandet.

Zweckmäßigerweise sind die oberen Futterzuführfenster 20 außerdem gleichmäßig in Umfangsrichtung verteilt und weisen eine Erstreckung in Umfangsrichtung von vorzugsweise 40 bis 120°, bevorzugt von 55 bis 65° auf, wobei vorzugsweise 2 bis 6, bevorzugt 3 bis 5 Futterzuführfenster 20 vorgesehen sind.

Zwischen den Futterzuführfenstern 20 werden in dem unteren Trichterführungsrohr 17 Stege 22 gebildet, an deren Steginnenwandungen 22a jeweils mindestens eine vertikal ausgerichtete und nach innen vorstehende Zentrierkante 23 und mindestens eine sich in Umfangsrichtung über die gesamte Breite der Stege 22 erstreckende und ebenfalls nach innen vorstehende Rastnase 24 vorgesehen sind, deren Funktionen weiter unten näher erläutert werden. Zentrierkanten 23 und Rastnasen 24 weisen dabei vorzugsweise einen V-förmigen Querschnitt auf. Der Radius der Steginnenwandungen 22a entspricht dabei dem Innenradius des unteren Trichterführungsrohres 17.

Des Weiteren besteht der Trogtrichter 3 vorzugsweise aus einem im Wesentlichen durchsichtigen oder transluzenten Kunststoff, bevorzugt einem Hartkunststoff, wie zum Beispiel Polypropylen (PP), und wird vorzugsweise durch Gießen, bevorzugt Spritzgießen oder Druckgießen hergestellt.

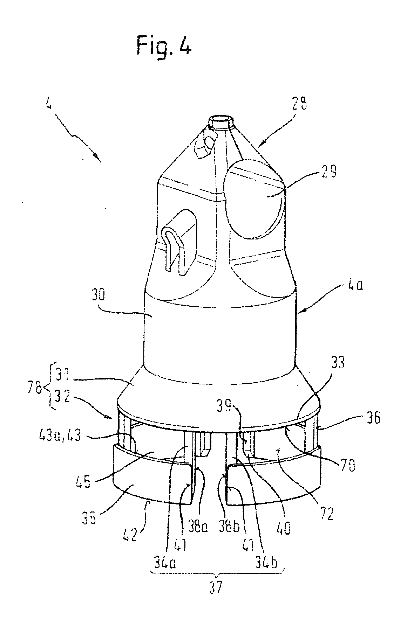

Das Fallrohr 4 des erfindungsgemäßen Futtertroges 1 (Fig. 1,4,6-9) weist nach einer ersten beispielhaften Ausführungsform an seinem oberen Ende eine Anschlusseinrichtung 28 mit einer durchgehenden Aufnahmeöffnung 29 zur Aufnahme und zum Anschluss an ein Förderrohr 103 mit einer horizontalen Förderrohrmittelachse 104 eines Röhrenfütterungssystem (nicht dargestellt) auf. An diese Anschlusseinrichtung 28 schließen sich in vertikaler Richtung nach unten in analoger Weise wie beim Trogtrichter 3 zunächst ein oberes zylindrisches Fallrohrführungsrohr 30, an dieses ein konisch nach außen laufender Fallrohrübergangskegel 31 und an diesen ein im Wesentlichen zylindrisches Fallrohrfutterzuführrohr 32 an. Der Außenradius des oberen Fallrohrführungsrohres 30 entspricht dabei vorzugsweise dem Radius der Führungssteginnenwandungen 77 des oberen Trichterführungsrohres 15 und die Steigung des Fallrohrübergangskegels 31 entspricht vorzugsweise der Steigung des Trichterübergangskegels 16.

Fallrohrübergangskegel 31 und Fallrohrfutterzuführrohr 32 bilden dabei einen Fallrohrfutterzuführbereich 78.

Das Fallrohrfutterzuführrohr 32 besteht im Wesentlichen aus einem Fallrohrringsteg 33 mit einer horizontalen Fallrohrringstegunterkante 70, an den sich vertikal nach unten gerichtete und in Umfangsrichtung voneinander beabstandete, vorzugsweise zylinderrohrsegmentförmige und jeweils paarweise zueinander gehörige Führungsbalken 34a, 34b anschließen, und aus sich in Umfangsrichtung erstreckenden zylinderrohrsegmentförmigen Schließsegmenten 35, die mit ihren Schließsegment-innenwandungen 72 an Führungsbalkenaußenkanten 36 angeordnet sind.

Die paarweisen Führungsbalken 34a, 34b bilden dabei jeweils mit ihren einander zugewandten, sich gegenüberliegenden und vertikal und vorzugsweise radial nach innen erstreckenden Balkenseitenführungskanten 38a, 38b und mit ihren sich vertikal und in Umfangsrichtung erstreckenden Balkeninnenführungskanten 39 Führungsschienen 37, auf denen das Fallrohr 4 in dem Raumstabwerk 5 vertikal verschieblich geführt wird, worauf weiter unten näher eingegangen wird.

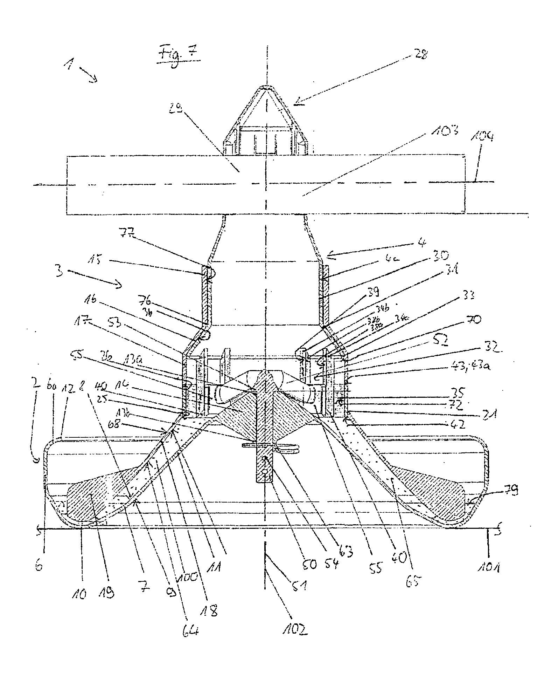

An ihrem unteren Ende weisen die Führungsbalken 34a, 34b außerdem jeweils eine Fase 40 auf, deren Steigung der Steigung des Rutschkegels 11 entspricht (Fig. 7-9 und 13-16).

Die an den Führungsbalkenaußenkanten 36 angeordneten Schließsegmente 35 dienen zum Verschließen der Futterzuführfenster 20 und weisen jeweils zwei vertikal und radial nach innen ausgerichtete Schließsegmentseitenkanten 41, eine sich in Umfangsrichtung erstreckende und zweckmäßigerweise horizontale Schließsegmentsunterkante 42 und eine sich in Umfangsrichtung und horizontal erstreckende Schließsegmentoberkante 43 auf. Vorzugsweise entspricht sowohl der Außenradius als auch der Innenradius der Schließsegmente 35 im Wesentlichen dem Außenradius bzw. dem Innenradius des unteren Trichterführungsrohres 17. Des Weiteren schließen die Schließsegmente 35 seitlich mit ihren Schließsegmentseitenkanten 41 bündig mit den Balkenseitenführungskanten 38a, 38b und unten bündig mit ihren Schließsegmentsunterkanten 42 mit dem unteren Ende der Führungsbalken 34a, 34b ab. Der vertikale Abstand der Schließsegmentsunterkanten 42 von den Schließsegmentsoberkanten 43 entspricht mindestens dem Abstand der Fensterunterkanten 25 von den Fensteroberkanten 26. Und die Erstreckung in Umfangsrichtung der Schließsegmente 35 entspricht zweckmäßigerweise der Erstreckung der Futterzuführfenster 20.

Erfindungsgemäß weist das Fallrohrfutterzuführrohr 32 zudem sich ebenfalls in Umfangsrichtung erstreckende Schlitze, als obere Futterzuführöffnungen 45 auf, die seitlich von den Führungsbalken 34a, 34b begrenzt werden, und deren Zufuhröffnungsunterkanten 43a den Schließsegmentsoberkanten 43 entsprechen und deren Zufuhröffnungsoberkanten 46 von der Fallrohrringstegunterkante 70 gebildet werden.

Die Zufuhröffnungsoberkanten 46 und Zufuhröffnungsunterkanten 43a sind dabei vorzugsweise um denselben Betrag vertikal voneinander beabstandet, wie die Fensteroberkanten 25 und Fensterunterkanten 26 der in dem Trogtrichter 3 vorgesehenen Futterzuführfenster 20 voneinander.

Zweckmäßigerweise sind die Futterzuführöffnungen 45 zudem ebenfalls gleichmäßig um den Umfang des Fallrohrfutterzuführbereichs 78 verteilt, wobei die Anzahl der Futterzuführöffnungen 45 der Anzahl der oberen Futterzuführfenster 20 im Trogtrichter 3 entspricht.

Da sowohl der Außenradius als auch der Innenradius der Schließsegmente 35 zweckmäßigerweise dem Außenradius bzw. dem Innenradius des unteren Trichterführungsrohres 17 entsprechen und der Außenradius des Ringstegs 33 dem Innenradius des Trichterführungsrohres 17 entspricht, sind die Zufuhröffnungsunterkanten 43a in Bezug zu den Zuführöffnungsoberkanten 46 radial nach außen, insbesondere um den Betrag der Wanddicke des Trogtrichters 3, versetzt angeordnet.

Das Fallrohr 4 besteht vorzugsweise wie der Trogtrichter 3 aus einem im Wesentlichen durchsichtigen oder transluzenten Kunststoff, bevorzugt einem Hartkunststoff, wie zum Beispiel Polypropylen (PP), und wird vorzugsweise durch Gießen, bevorzugt Spritzgießen oder Druckgießen hergestellt.

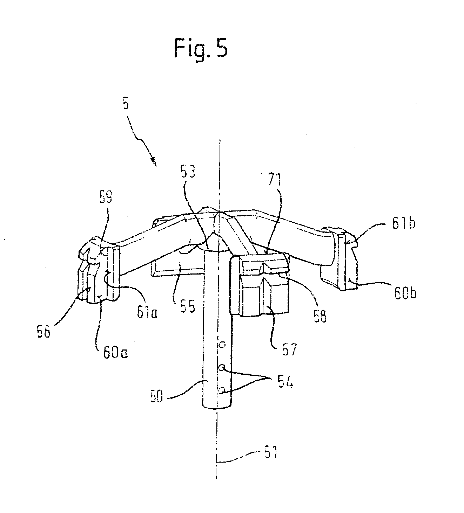

Das Raumstabwerk 5 des erfindungsgemäßen Futtertroges 1 weist nach einer ersten beispielhaften Ausführungsform einen vertikal nach unten gerichteten, zentralen Mittelstab 50 mit einer Mittelstabachse 51 und mehrere, vorzugsweise vier sich von dem Mittelstab 50 im Wesentlichen radial nach außen und unten erstreckende, kreuzweise angeordnete Stützstäbe 52 auf (Fig. 5, 6-9) . In Umfangsrichtung sind die Stützstäbe 52 vorzugsweise gleichmäßig um den Mittelstab 50 herum angeordnet. Die Anzahl der Stützstäbe 52 entspricht zweckmäßigerweise der Anzahl der zwischen den oberen Futterzuführfenstern 20 gebildeten Stege 22 des Trogtrichters 3.

Des weiteren besteht das Raumstabwerk 5 vorzugsweise aus einem Kunststoff, bevorzugt einem Hartkunststoff, wie zum Beispiel Polyoxymethylen (POM), und wird vorzugsweise durch Gießen, bevorzugt Spritzgießen oder Druckgießen hergestellt.

Der Mittelstab 50 weist an seinem oberen Ende unterhalb der Stützstäbe 52 außerdem zweckmäßigerweise einen Mittelstabanlaufbund 53 und an seinem unteren Ende zweckmäßigerweise mindestens eine, vorzugsweise 1 bis 5, bevorzugt 2 bis 4 senkrecht zur Mittelstabachse 52 angeordnete Durchgangsbohrungen 54 auf, die zur Aufnahme eines Stifts oder eines Splints 63 oder dergleichen zur vertikalen Positionierung des Raumstabwerks 5 in der Bodenschale 2 dienen.

Des Weiteren weisen die Stützstäbe 52 des Raumstabwerks 5 außenendseitig im Wesentlichen zylinderwandungssegmentförmige Führungsklötze 55 auf, an deren Führungsklotzaußenwandungen 56 jeweils mindestens eine vertikal ausgerichtete, zu der Zentrierkante 23 des Trogtrichters 3 korrespondierende Zentriernut 57, und mindestens eine horizontal ausgerichtete, zu der Rastnase 24 des Trogtrichters 3 korrespondierende Rastnut 58 vorgesehen sind. Der Radius der Führungsklotz-außenwandungen 56 entspricht dabei vorzugsweise dem Innenradius des unteren Trichterführungsrohres 17 bzw. dem Radius der Steginnenwandungen 22a und die Erstreckung der Führungsklotzaußenwandungen 56 in Umfangsrichtung entspricht zweckmäßigerweise der Erstreckung der Stege 22 des Trogtrichters 3 in Umfangsrichtung.

Zudem können die Führungsklötze 55 an ihrem unteren Ende zur besseren Demontage angefasst sein (nicht dargestellt).

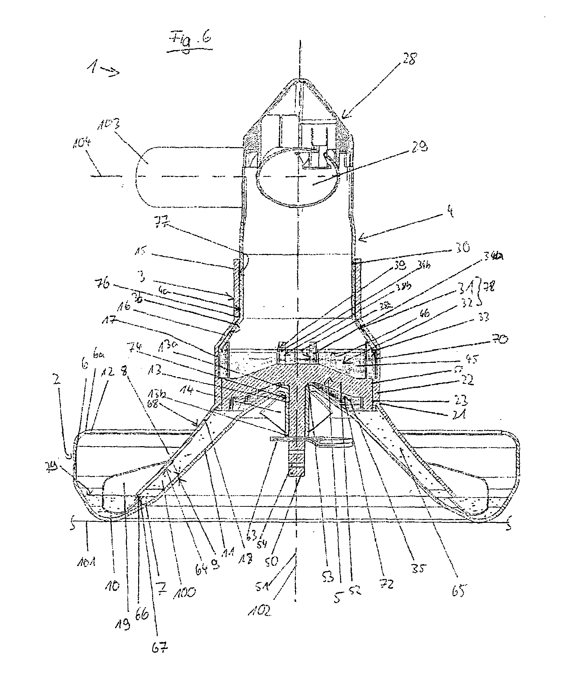

Außerdem weisen die Führungsklötze 55 jeweils beidseitig im Wesentlichen rechtwinklige, sich vertikal erstreckende Stufenabsätze 59 und dadurch gebildete vertikale und radiale Klotzseitenführungskanten 60a, 60b und außenseitige und ebenfalls vertikale und sich in Umfangsrichtung erstreckende Klotzaußenführungskanten 61a, 61b zur Aufnahme und vertikalen Führung der Führungsbalken 34a, 34b des Fallrohrs 4 auf. Der Radius der Klotzaußenführungskanten 61a, 61b entspricht zweckmäßigerweise dem Radius der Balkeninnenführungskanten 39 und der Abstand der beiden Klotzseitenführungskanten 60a, 60b jeweils eines Führungsklotzes 55 in Umfangsrichtung entspricht dem Abstand der Balkenseitenführungskanten 38a, 38b in Umfangsrichtung voneinander, so dass die Klotzseitenführungskanten 60a, 60b im zusammengebauten Zustand der Futtertroges 1 formschlüssig und aneinander gleitend mit den Balkenseitenführungskanten 38a, 38b korrespondieren, was im Folgenden anhand der Fig. 6 bis 9 näher erläutert wird.

Im in den Fig. 6 bis 9 dargestellten zusammengebauten Zustand des erfindungsgemäßen Futtertroges 1 sitzt die Bodenschale 2 zur Fütterung zweckmäßigerweise mit ihrer Bodenwandungsrinne 10 auf dem Hallenboden 101 auf. In der Aufnahmehülse 13 der Bodenschale 2 ist der Mittelstab 50 des Raumstabwerkes 5 derart angeordnet, dass die Mittelstabachse 51 mit der Futtertrogmittelachse 102 zusammenfällt.

Dabei sitzt der Mittelstab 50 mit seinem Mittelstabanlaufbund 53 auf dem oberen Anlaufbund 13a der Aufnahmehülse 13 auf und ist dadurch in Kombination mit dem Splint 63, der in der obersten der Durchgangsbohrungen 54 eingeführt ist und sich am unteren Anlaufbund 13b der Aufnahmehülse abstützt, vertikal gesichert und somit vertikal und horizontal unverschieblich, aber frei um die Futtertrogmittelachse 102 drehbar, in der Aufnahmehülse 13 der Bodenschale 2 gelagert.

Des Weiteren sind die Stützstäbe 52 des Raumstabwerks 5 mit ihren in den Führungsklötzen 55 vorgesehenen Zentriernuten 57 in den korrespondierenden Zentrierkanten 23 des Trogtrichters 3 angeordnet und die Rastnuten 58 der Stützstäbe 52 mit den Rastnasen 24 des Trogtrichters 3 verrastet, so dass die Führungsklotzaußenwandungen 56 an den Steginnenwandungen 22a anliegen und die Klotzseitenführungskanten 60a, 60b radial fluchtend zu den Fensterseitenkanten 27 angeordnet sind.

Somit sind der Trogtrichter 3 und das Raumstabwerk 5 unverschieblich und unverdrehbar miteinander verbunden und der Trogtrichter 3 ist über das Raumstabwerk 5 mit der Bodenschale 2 vertikal und horizontal unverschieblich, aber frei um die Futtertrogmittelachse 102 drehbar, verbunden.

Des Weiteren ist der Trogtrichter 3 im zusammengebauten Zustand des erfindungsgemäßen Futtertroges 1 derart oberhalb der Bodenschale 2 angeordnet, dass zwischen der Bodenwandungsoberfläche 8 des Rutschkegels 11 und einer Futterleitkegelunterseite 64 ein Ringspalt 65 gebildet wird. Dabei ist vorzugsweise die Steigung des Futterleitkegels 18 etwas größer als die Steigung des Rutschkegels 11, so dass sich der Ringspalt 65 nach unten in Richtung Boden 101 hin geringfügig verjüngt. Des Weiteren wird erfindungsgemäß zwischen einer Futterleitkegelunterkante 66 am unteren Ende des Futterleitkegels 18 und der Bodenwandung 6 der Bodenschale 2 eine untere Futterzuführöffnung 67 gebildet.

Das Fallrohr 4 des erfindungsgemäßen Futtertroges 1 ist im zusammengebauten Zustand innerhalb des Trogtrichters 3 angeordnet und mit seinen von den paarweisen Führungsbalken 34a, 34b gebildeten Führungsschienen 37 auf den Führungsklötzen 55 des Raumstabwerks 5 vertikal verschieblich und unverdrehbar zu dem Raumstabwerk 5 und folglich auch zu dem mit dem Raumstabwerk 5 fest verrasteten Trogtrichter 3 gelagert. Dabei liegen die Balkenseitenführungskanten 38a, 38b an den Klotzseitenführungskanten 60a, 60b und die Balkeninnen-führungskanten 39 an den Klotzaußenführungskanten 61a, 61b formschlüssig an.

Da der Radius der Führungssteginnenwandungen 77 des oberen Trichterführungsrohres 15 zweckmäßigerweise dem Außenradius des oberen Fallrohrführungsrohrs 30 entspricht, liegt das Fallrohr 4 vorzugsweise zusätzlich in diesem Bereich mit einer Fallrohraußenwandung 4a zumindest teilbereichsweise an den Führungssteginnenwandungen 77 an.

Das Fallrohr 4 ist außerdem an einem in der Aufnahmeöffnung 29 der am oberen Ende des Fallrohres 4 angeordneten Anschlusseinrichtung 28 angeordneten Förderrohr 103 eines Röhrenfütterungssystem (nicht dargestellt) befestigt.

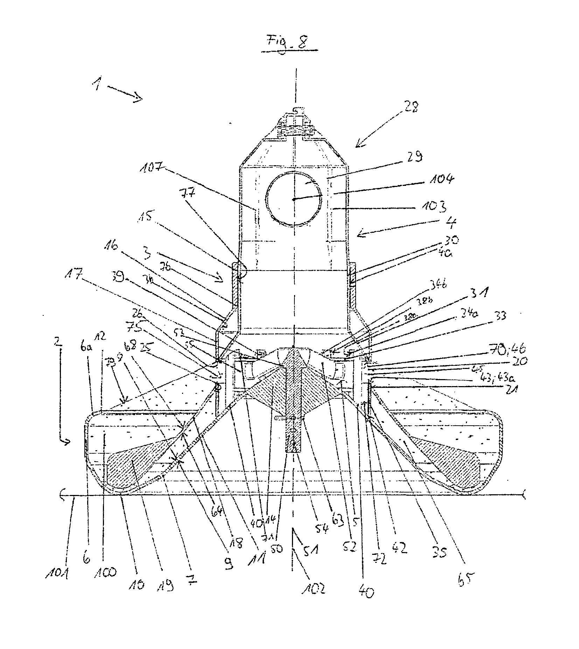

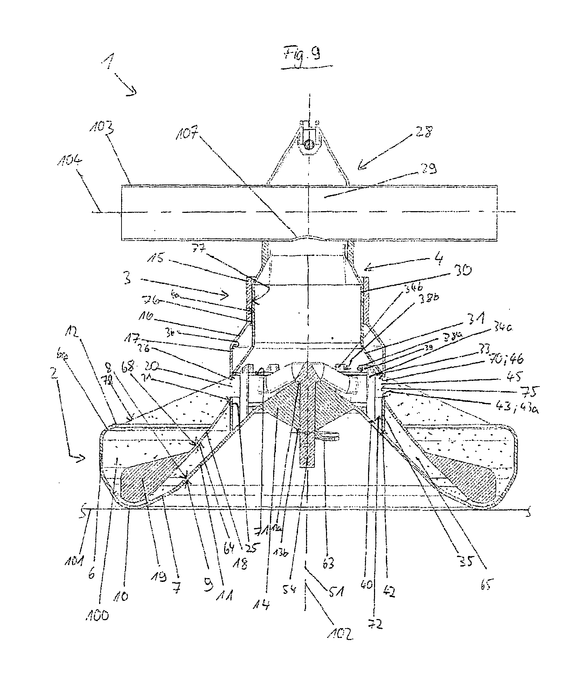

Zum Füttern der Eintagsküken mit dem erfindungsgemäßen Futtertrog 1 wird der Futtertrog 1 beispielsweise an dem Förderrohr 103 hängend auf dem Hallenboden 101 abgestellt und das Förderrohr 103 soweit nach unten verfahren, dass sich das Fallrohr 4 in einer unteren Stellung bezüglich des Trogtrichters 3 befindet (Fig.8 und 9). Alternativ kann der Futtertrog 1 auch zunächst ohne das Förderrohr 103 auf dem Boden 101 abgestellt werden, wobei das Fallrohr 4 automatisch aufgrund der Schwerkraft in seine untere Stellung gleitet.

In dieser unteren Stellung ist das Fallrohr 4 innerhalb des Trogtrichters 3 soweit nach unten verschoben, dass es formschlüssig mit den an den unteren Enden der Führungsbalken 34a, 34b vorgesehenen Fasen 40 und mit den Schließsegmentunterkanten 42 auf der Bodenwandungsoberfläche 8 des Rutschkegels 11 der Bodenschale 2 aufsitzt und das Futter 100 nur durch die zwischen den paarweisen Führungsbalken 34a, 34b gebildeten Zwischenräume über den Rutschkegel 11 abfließt.

In dieser Stellung ist das Fallrohr 4 außerdem erfindungsgemäß soweit nach unten verschoben, dass die Futterzuführöffnungen 45 und die Futterzuführfenster 20 sich gegenüberliegend angeordnet sind und Futterdurchgänge 75 bilden. Vorzugsweise liegen dabei die Zufuhröffnungsunterkanten 43a im wesentlichen auf Höhe der Fensterunterkanten 25 der Futterzuführfenster 20, so dass die oberen Futterzuführöffnungen 45 des Fallrohres 4 radial fluchtend und auf gleicher Höhe mit den Futterzuführfenstern 20 des Trogtrichters 3 liegen und diese geöffnet sind. Das vom Förderrohr angeförderte Futter 100 fließt somit in dieser Stellung des Fallrohres 4 durch eine Förderrohröffnung 107 in das Fallrohr 4 und aus dem Fallrohr 4 durch die Futterzuführöffnungen 45 und die Futterzuführfenster 20 heraus und über eine Futterleitkegeloberseite 68 in die Bodenschale 2.

Aufgrund der deutlich oberhalb des Umfangsrandes 6a der Bodenschale 2 gelegenen Futterzuführfenster 20 und der relativ weit außen angeordneten Futtermulde 10 wird ein kegeliger bzw. konischer Futterpegel 79 erzielt, der zweckmäßigerweise in etwa bis zur Fresskante 12 reicht, wodurch das Futter 100 auch für Eintagsküken gut sichtbar und bequem zu erreichen ist. Des weiteren sind die Scharrflügel 19 durch den hohen Futterpegel 79 vollständig von dem Futter 100 bedeckt, so dass die Küken ungehindert in die Bodenschale ein- und aussteigen können, wozu sie durch das gut sichtbare Futter 100 noch zusätzlich animiert werden.

Um den Futtertrog 1, wenn die Küken ausreichend gewachsen sind, in die obere Stellung (Fig.6 und 7) zur Fütterung von älterem Geflügel zu bringen, wird zunächst das Fallrohr 4 zum Beispiel durch Hochziehen der Förderröhre 103 angehoben.

Dabei gleiten die Balkenseitenführungskanten 38a, 38b an den Klotzseitenführungskanten 60a, 60b und die Balkeninnen-führungskanten 39 an den Klotzaußenführungskanten 61a, 61b und im Bereich des oberen Trichterführungsrohres 30 die Fallrohraußenwandung 4a an den Führungssteginnenwandungen 77 entlang, so dass das Fallrohr im Trogtrichter 3 nicht verkantet.

Zudem werden erfindungsgemäß die Schließsegmente 35 mit ihren Schließsegmentsseitenkanten 41 soweit an den Fensterseitenkanten 27 entlang nach oben geführt, bis die Schließ-segmentsoberkanten 43 an den Fensteroberkanten 26 anstoßen und daran formschlüssig anliegen. Gleichzeitig gleiten die Schließsegmente 35 dabei mit Schließsegmentaußenwandungen 73 an den Fensterunterkanten 25 entlang. Wenn die Schließ-segmentsoberkanten 43 an den Fensteroberkanten 26 angestoßen sind und sich das Fallrohr 4 somit in seiner oberen Stellung befindet, sind die Schließsegmentunterkanten 42 in etwa auf Höhe der Fensterunterkanten 25 angeordnet, so dass die Schließsegmente 35 mit ihren Schließsegmentaußenwandungen 73 an den Fensterunterkanten 25 anliegen.

Somit werden die oberen Futterzuführöffnungen 20 von den Schließsegmenten 35 insbesondere formschlüssig verschlossen.

Außerdem liegt zweckmäßigerweise auch die Fallrohraußenwandung 4a im Bereich des Fallrohrübergangskegel 31 formschlüssig an der Trichterinnenwandung 3b im Bereich des Trichter-übergangskegels 16 an, so dass ein weiteres Anheben des Fallrohres 4 ohne den Trogtrichter 3 nicht mehr möglich ist.

In dieser oberen Position des Fallrohres 4 fließt das angeförderte Futter 100 von dem Fallrohr 4 lediglich durch den Ringspalt 65 und die zwischen der Futterleitkegelunterkante 66 und der Bodenwandungsoberfläche 8 der Bodenschale 2 gebildete untere Futterzuführöffnung 67 in die Bodenschale 2.

Aufgrund der deutlich unterhalb des Umfangsrandes 6a gelegenen unteren Futterzuführöffnung 67 ist der Pegelstand 79 des Futters 100 in dieser Stellung relativ niedrig, so dass dem Geflügel eine geringe Futtermenge angeboten wird und durch ständiges Nachfördern immer frisches Futter 100 zur Verfügung steht, wodurch die Fresslust und somit das Wachstum des Geflügels gefördert wird. Des weiteren ist der Futterpegel 79 so niedrig, dass die Scharrflügel 19 nur teilweise mit Futter 100 bedeckt sind, so dass das ausgewachsene Geflügel nicht in die Bodenschale 2 einsteigt.

Die Höhe des Futterpegels 79 in der oberen Stellung des Fallrohres 4 kann allerdings noch weiter variiert werden, indem der Splint 63 in eine der beiden unteren Durchgangsbohrungen 54 eingeführt wird, so dass das Raumstabwerk 5 um einen begrenzten Betrag vertikal verschieblich in der Bodenschale 2 gelagert ist, wobei der Betrag über die Wahl der Durchgangsbohrung 54, in der der Splint 63 angeordnet ist, einstellbar ist.

Alternativ kann der Mittelstab 50 auch mit einem Außengewinde versehen sein und die vertikale Verschieblichkeit des Trogtrichters 3 zu der Bodenschale 2 mit einer Mutter oder dergleichen eingestellt werden (nicht dargestellt).

Beim weiteren Anheben des Fallrohres 4 beispielsweise mittels des Förderrohres 103 gleitet der Mittelstab 50 in der Aufnahmehülse 13 nach oben, bis der in einer der beiden unteren Durchgangsbohrungen 54 eingeführte Splint 63 an den unteren Anlaufbund 13b der Aufnahmehülse 13 anstößt. Dadurch wird sowohl der Ringspalt 65 als auch die erste Futterzuführöffnung 67 vergrößert und der Futterpegel 79 erhöht. Die Höhe des Futterpegels 79 in der oberen Stellung des Fallrohres 4 kann somit über die Wahl der Durchgangsbohrungen 54 gezielt verändert werden.

Es ist auch möglich den gesamten Futtertrog 1 in der oberen Stellung des Fallrohres 4 noch weiter anzuheben, so dass der Futtertrog 1 frei pendelnd hängt und die Fresskante 12 weiter erhöht wird.

Zudem können Trogtrichter 3, Fallrohr 4 und Bodenschale 2 ganz oder auch abschnittsweise anstatt im Querschnitt zylindrisch auch einen beliebigen anderen Querschnitt aufweisen, beispielsweise einen quaderförmigen oder sechseckigen Querschnitt. Dementsprechend können dann auch die Schließ-segmente 35, die Führungsbalken 37a, 37b und die Führungsklötze 55 anstatt zylinderrohrsegmentförmig beispielsweise quaderförmig oder dergleichen ausgeführt sein.

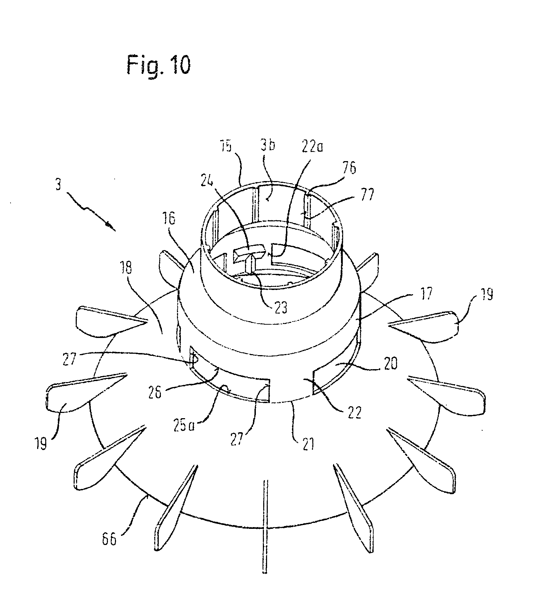

Eine zweite bevorzugte Ausführungsform des erfindungsgemäßen Futtertrogs 1, die sich insbesondere hinsichtlich der Führung des Fallrohres 4 auf dem Raumstabwerk 5 und hinsichtlich der Form der Futterzuführöffnungen 45 unterscheidet, ist in den (Fig. 10-16) dargestellt.

Bei dieser Ausführungsform erstrecken sich die Rastnasen 24 des Trogtrichters 3 (Fig. 10 und 13-16) nicht über die gesamte Breite in Umfangsrichtung der Stege 22, so dass jeweils seitlich von den Rastnasen 24 die Steginnenwandungen 22a frei bleiben.

Des weiteren sind die Fensteroberkanten 26 nicht sich in Umfangsrichtung erstreckend und horizontal, sondern sich in Umfangsrichtung erstreckend und konisch nach unten außen gerichtet ausgebildet.

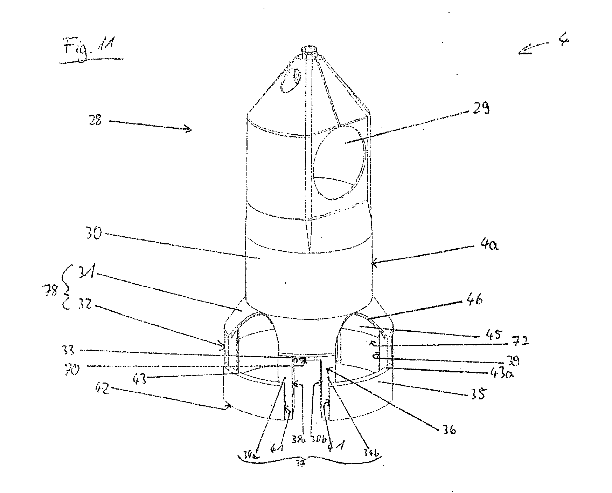

Das Fallrohr 4 (Fig. 11 und 13-16) ist dahingehend verändert, dass sich die Zuführöffnungsoberkanten 46 bogenförmig, radial nach innen und oben in den Fallrohrübergangskegel 31 hinein erstrecken. Dabei ist das obere Ende der Zuführöffnungsoberkanten 46 zweckmäßigerweise in einem Übergangsbereich vom Fallrohrübergangskegel 31 zu dem Fallrohrführungsrohr 30 angeordnet.

Korrespondierend zu den Fensteroberkanten 26 erstrecken sich die Zuführöffnungsunterkanten 43a ebenfalls in Umfangsrichtung und konisch nach unten und außen.

Zudem sind die Führungsbalken 34a, 34b in Umfangsrichtung und einander zugewandt verbreitert ausgebildet, so dass die Balkenseitenführungskanten 38a, 38b nicht mehr bündig mit den Schließsegmentseitenkanten 41 abschließen, sondern in Bezug zu diesen zueinander versetzt sind. Außerdem sind die Führungsbalken 34a, 34b u.a. aus Gründen der Materialersparnis radial von innen nach außen und vertikal eingekerbt.

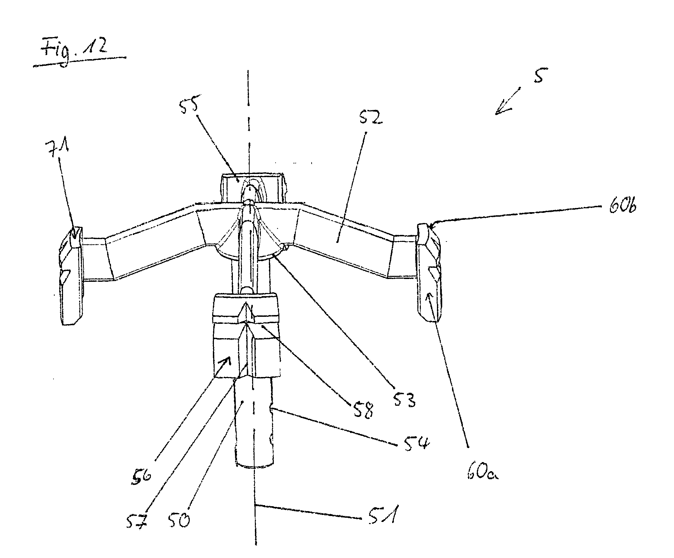

Die Führungsklötze 55 des Stabwerks 5 (Fig. 12-16) weisen nach dieser zweiten Ausführungsform keinen Stufenabsatz 59 mehr auf, so dass auch die Klotzaußenführungskanten 61a, 61b entfallen. Dabei entspricht die Erstreckung der Führungsklotzaußenwandungen 56 in Umfangsrichtung zweckmäßigerweise nicht der Erstreckung der Stege 22 des Trogtrichters 3, sondern der Erstreckung der an den Steginnenwandungen 22a angeordneten Rastnasen 24 in Umfangsrichtung.

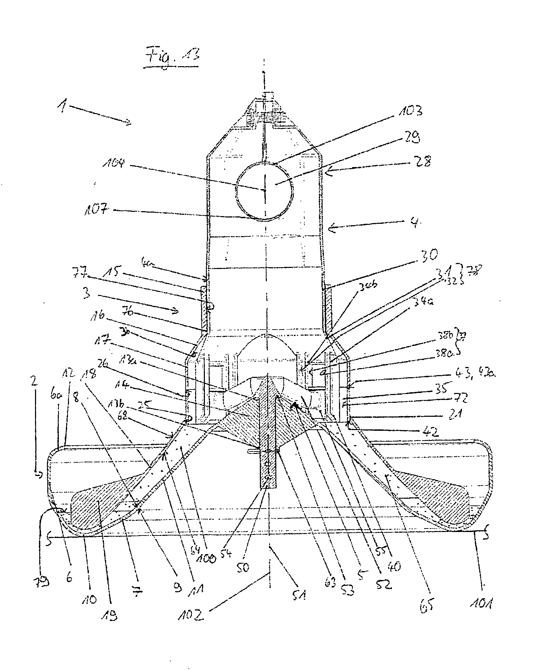

Im zusammengebauten Zustand (Fig. 13-16) der zweiten Ausführungsform des Futtertroges 1 sind die Stützstäbe 52 des Raumstabwerks 5 ebenfalls mit ihren in den Führungsklötzen 55 vorgesehenen Zentriernuten 57 in den korrespondierenden Zentrierkanten 23 des Trogtrichters 3 angeordnet und die Rastnuten 58 der Stützstäbe 52 mit den Rastnasen 24 des Trogtrichters 3 verrastet, so dass die Führungsklotzaußenwandungen 56 an den Steginnenwandungen 22a anliegen. Des weiteren ist das Fallrohr 4 mit seinen Führungsbalken 34a, 34b auf den Führungsklötzen 55 des Raumstabwerks 5 vertikal verschieblich zu dem Raumstabwerk 5 gelagert. Dabei liegen die Balkenseitenführungskanten 38a, 38b analog zu dem ersten Ausführungsbeispiel an den Klotzseitenführungskanten 60a, 60b an. Allerdings liegen die Balkeninnenführungskanten 39 nicht mehr an den Klotzaußenführungskanten 61a, 61b, sondern die Balkenaußenführungskanten 36 liegen jeweils seitlich der Rastnasen 24 an den Steginnenwandungen 22a formschlüssig an, so dass beim Anheben und Absenken des Fallrohres 4 die Balkenaußenführungskanten 36 an den Steginnenwandungen 22a entlang geführt werden.

Des weiteren sind die konisch ausgeführten Schließsegmentoberkanten 43 bzw. Zufuhröffnungsunterkanten 43a in der unteren Stellung des Fallrohres 4 so auf Höhe der Fensterunterkanten 25 angeordnet, dass sie im Wesentlichen die Verlängerung der Futterleitkegeloberseite 68 bilden, so dass das ankommende Futter 100 noch besser abfließen kann.

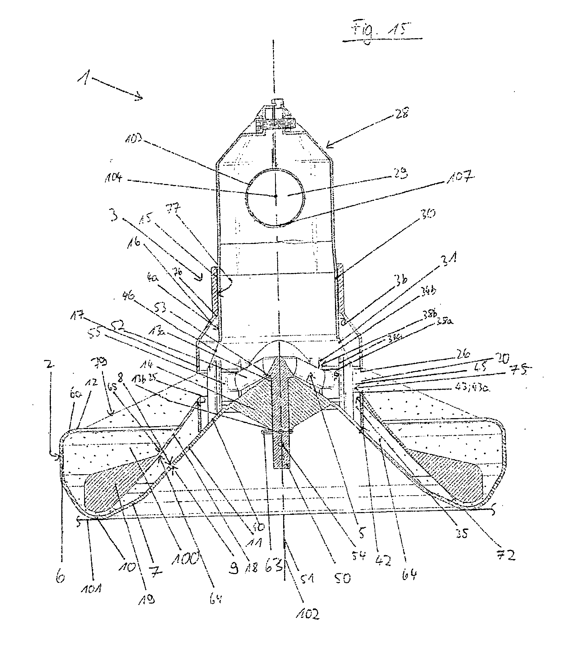

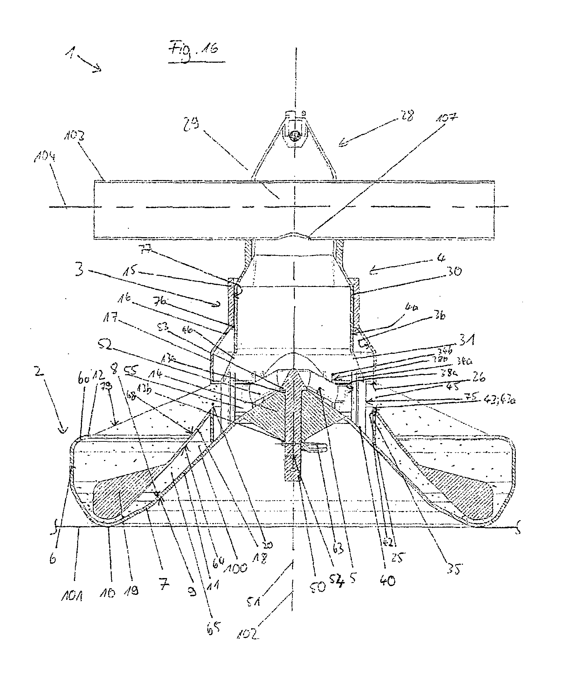

Ein wesentlicher Vorteil des bogenförmigen Verlaufs der Zufuhröffnungsoberkanten 46 ist zudem in der in den Fig. 15 und 16 dargestellten oberen Stellung des Fallrohres zu erkennen. Die Fallrohraußenwandung 4a liegt aufgrund der vergrößerten und sich in den Trichterübergangskegel 16 hinein erstreckenden Zufuhröffnungsoberkanten 46 nicht an der gesamten Trichterinnenwandung 3b im Bereich des Trichterübergangskegels 16 an. Dies ist beim Reinigen des Futtertroges 1 von besonderem Vorteil, da das Waschwasser durch den Bereich des Trichterübergangskegels 16 bzw. des Fallrohrübergangskegels 31 zwischen Fallrohraußenwandung 4a und Trichterinnenwandung 3b in den Bereich des Trichterführungsrohres 15 bzw. des Fallrohrführungsrohres 30 und von dort nach außen abfließen kann. Dadurch wird eine gründliche Reinigung des Futtertroges 1 gewährleistet.

Selbstverständlich ist es auch möglich, den Futtertrog 1 nur teilweise hinsichtlich des zweiten Ausführungsbeispiels, zum Beispiel hinsichtlich der Form der Futterzuführfenster 45, zu modifizieren.

Bei der Montage des erfindungsgemäßen Futtertroges 1 wird zunächst das Fallrohr 4 von unten in den Trogtrichter 3 eingeführt und danach das Raumstabwerk 5 ebenfalls von unten mit seinen Zentriernuten 57 in die Zentrierkanten 23 des Trogtrichters 3 und mit seinen Führungsklötzen 55 zwischen die Führungsbalken 34a, 34b des Fallrohres 4 eingeführt und die Rastnuten 58 mit den Rastnasen 24 verrastet. In dieser von Trogtrichter 3, Fallrohr 4 und Raumstabwerk 5 gebildeten Einheit, ist das Fallrohr 4 dadurch vertikal nach unten gegen Herausgleiten gesichert, dass Führungsklotzoberseiten 71 als Anschlag für die Fallrohrringstegunterkante 70 dienen. Danach wird diese gesamte Einheit auf die Bodenschale 2 montiert, indem der Mittelstab 50 des Raumstabwerks 5 in die Aufnahmehülse 13 eingeführt wird und mit dem Splint 63 gesichert wird.

Der erfindungsgemäße Futtertrog ist aufgrund der unterschiedlich hoch angeordneten Futterzuführöffnungen und der damit einstellbaren unterschiedlich hohen Futterpegel-stände sehr gut für den Einsatz bei der Geflügelaufzucht geeignet.

Junges Geflügel wird bei geöffneten oberen Futterzuführöffnungen aufgrund des konischen und dadurch gut sichtbaren Futterpegels, der die Scharrflügel vollständig bedeckt, dazu animiert, in die Bodenschale einzusteigen, wodurch die Fresslust und damit das Wachstum der Küken gefördert werden.

Durch die Formgebung des erfindungsgemäßen Futtertroges mit Fallrohr- bzw. Trichterübergangskegel und oberem Fallrohr- bzw. Trichterführungsrohr wird zudem das Futteraufnahmevolumen des Futtertroges verringert, so dass das sich in dem Fallrohr befindliche Futter immer frisch ist.

Des Weiteren ist der erfindungsgemäße Futtertrog sehr einfach und kompakt aufgebaut, leicht zu handhaben und kostengünstig herstellbar. Bei der Montage bzw. Demontage beispielsweise zur Reinigung der Bodenschale können Trogtrichter, Fallrohr und Raumstabwerk als eine Einheit einfach und schnell durch Herausziehen des Mittelsstabes aus der Aufnahmehülse von der Bodenschale entfernt werden und aufgrund des kompakten Aufbaus der Einheit leicht gehandhabt werden.

Zudem muss bei dem erfindungsgemäßen Futtertrog das Fallrohr beim Anheben von der unteren in die obere Stellung nicht gegen den Druck des Futters angehoben werden, da sich das Fallrohr vollkommen innerhalb des Trogtrichters befindet und das Futter nur auf der Oberseite des Futterleitkegels des Trogtrichters, nicht auf dem Fallrohr liegt. Somit wird auch kein Futter beim Anheben des Fallrohres nach außen weggeschleudert und geht dabei verloren.

Auch beim Absenken des Fallrohres von der oberen in die untere Stellung, ist der benötigte Kraftaufwand relativ gering, da nur wenig Futter verdrängt werden muss, da das Fallrohr nur an einer Stelle und nicht zweimal auf der Bodenschale aufsitzt.

## Patentansprüche

1. Futtertrog für die Aufzucht von Geflügel, mit
a) einer Bodenschale (2), die eine Bodenwandung (7) mit einem kegelförmig nach oben gerichteten und auf eine vertikale Futtertrogmittelachse (102) zulaufenden Rutschkegel (11) aufweist,
b) einem mittig zentral über der Bodenschale (2) und vertikal zu dieser verschieblich angeordneten Fallrohr (4), das an einem unteren Fallrohrfutterzuführbereich (32) obere Futterzuführöffnungen (45),
c) einem mittig zentral über der Bodenschale (2) angeordneten und mit der Bodenschale (2) - vorzugsweise vertikal verschieblich - verbundenen Trogtrichter (3) mit einem Trichterführungsrohr (17), an das sich vertikal nach unten ein konisch nach außen gerichteter Futterleitkegel (18) anschließt, wobei in dem Trichterführungsrohr (17) Futterzuführfenster (20) vorgesehen sind und zwischen einer Futterleitkegelunterkante (66) und der Bodenwandung (7) eine untere Futterzuführöffnung (67) gebildet wird
wobei
d) das Fallrohr (4) innerhalb des Trogtrichters (3) angeordnet ist und vertikal verschieblich mit diesem in Verbindung steht,
e) in einer oberen Stellung des Fallrohres (4) bezüglich des Trogtrichters (3) die untere Futterzuführöffnung (67) geöffnet ist und
f) in einer unteren Stellung des Fallrohres (4) bezüglich des Trogtrichters (3) die Futterzuführöffnungen (45) und Futterzuführfenster (20) sich gegenüberliegend angeordnet sind und Futterdurchgänge (75) bilden
**dadurch gekennzeichnet, dass**
g) der Futtertrog ein Raum- bzw. Verbindungsstabwerk (5) aufweist, das innerhalb des Trogtrichters (3) angeordnet ist und mit diesem unverschieblich und unverdrehbar in Verbindung steht und das mit dem Fallrohr (4) vertikal verschieblich, horizontal unverschieblich und unverdrehbar in Verbindung steht, und
h) das Fallrohr (4) unter den oberen Futterzuführöffnungen (45) angeordnete Schließsegmente (35) aufweist, die in der oberen Stellung des Fallrohres (4) bezüglich des Trogtrichters (3) die Futterzuführfenster (20) verschließen.

2. Futtertrog nach Anspruch 1,
**dadurch gekennzeichnet, dass**
in der unteren Stellung des Fallrohres (4) Zuführöffnungsunterkanten (43a) der Futterzuführöffnungen (45) im Wesentlichen auf Höhe von Fensterunterkanten (25) der Futterzuführfenster (20) liegen.

3. Futtertrog nach Anspruch 1 und/oder 2,
**dadurch gekennzeichnet, dass**
in der unteren Stellung des Fallrohres (4) die oberen Futterzuführöffnungen (45) radial fluchtend zu den Futterzuführfenstern (20) liegen.

4. Futtertrog nach einem oder mehreren der Ansprüche 1 bis 3,
**dadurch gekennzeichnet, dass**
zwischen einer Bodenwandungsoberfläche (8) des Rutschkegels (11) und einer Futterleitkegelunterseite (64) ein Ringspalt (65) gebildet wird.

5. Futtertrog nach einem oder mehreren der Ansprüche 1 bis 4,
**dadurch gekennzeichnet, dass**
die Bodenschale (2) eine aufrecht stehende, im Wesentlichen vertikal nach oben gerichtete Umfangswandung (6) mit einem oberen Umfangsrand (6a) aufweist, wobei die Bodenwandung (7) über eine konkave Bodenwandungsrinne bzw. Futtermulde (10) von der Umfangswandung (6) in den Rutschkegel (11) übergeht.

6. Futtertrog nach einem oder mehreren der Ansprüche 1 bis 5,
**dadurch gekennzeichnet, dass**
die Bodenwandung (7) am oberen Ende des Rutschkegels (11) derart nach innen unten eingestülpt ist, dass eine vertikal nach unten und zweckmäßigerweise konzentrisch zur Futtertrogmittelachse (102) ausgerichtete Aufnahmehülse (13), vorzugsweise mit einem oberen Anlaufbund (13a) an einer oberen Öffnung und einem unteren Anlaufbund (13b) an einer unteren Öffnung, gebildet wird, wobei zweckmäßigerweise zwischen einer Bodenwandungsunterfläche (9) und einer Hülsenaußenwandung (74) Versteifungsrippen (14) vorgesehen sind.

7. Futtertrog nach einem oder mehreren der Ansprüche 1 bis 6,
**dadurch gekennzeichnet, dass**
die Bodenschale (2) aus Kunststoff, vorzugsweise einem Hartkunststoff, beispielsweise High-Density-Polyethylen (HDPE) und/oder Polyethylen (PE) besteht und/oder durch Gießen, bevorzugt Druckgießen oder Spritzgießen hergestellt ist.

8. Futtertrog nach einem oder mehreren der Ansprüche 1 bis 7,
**dadurch gekennzeichnet, dass**
der Trogtrichter (3) jeweils in vertikaler Richtung nach unten einander nachgeordnet ein oberes, vorzugsweise zylindrisches, Trichterführungsrohr (15), einen oberen, konisch radial nach außen gerichteten, Trichterübergangskegel (16), das untere, vorzugsweise zylindrische, Trichterführungsrohr (17) und den Futterleitkegel (18) aufweist.

9. Futtertrog nach einem oder mehreren der Ansprüche 1 bis 8,
**dadurch gekennzeichnet, dass**
am unteren Ende des Futterleitkegels (18), um den gesamten Umfang, vorzugsweise gleichmäßig verteilt, Scharrflügel (19) angeordnet sind, wobei vorzugsweise 9 bis 15, bevorzugt 11 bis 13 Scharrflügel vorgesehen sind.

10. Futtertrog nach Anspruch 8 und/oder 9,
**dadurch gekennzeichnet, dass**
an einer Trichterinnenwandung (3b) im Bereich des oberen Trichterführungsrohres (15) vertikal ausgerichtete, und zweckmäßigerweise in Umfangsrichtung gleichmäßig verteilte, Führungsstege (76) mit Führungssteginnenwandungen (77) angeordnet sind.

11. Futtertrog nach einem oder mehreren der Ansprüche 1 bis 10,
**dadurch gekennzeichnet, dass**
die Futterzuführfenster (20) als sich in Umfangsrichtung erstreckende Schlitze ausgebildet sind.

12. Futtertrog nach einem oder mehreren der Ansprüche 1 bis 11,
**dadurch gekennzeichnet, dass**
die Futterzuführfenster (20) jeweils eine sich in Umfangsrichtung und vorzugsweise vertikal erstreckende Fensterunterkante (25) aufweisen, deren Radius zweckmäßigerweise dem Außenradius des unteren Trichterführungsrohres (17) entspricht, wobei die Fensterunterkanten (25) vorzugsweise in einem Übergangsbereich (21) vom unteren Trichterführungsrohr (17) zum Futterleitkegel (18) angeordnet sind.

13. Futtertrog nach einem oder mehreren der Ansprüche 1 bis 12,
**dadurch gekennzeichnet, dass**
die Futterzuführfenster (20) jeweils zwei vertikal, und vorzugsweise radial nach innen, ausgerichtete Fensterseitenführungskanten (27) aufweisen.

14. Futtertrog nach einem oder mehreren der Ansprüche 1 bis 13,
**dadurch gekennzeichnet, dass**
die Futterzuführfenster (20) jeweils eine sich in Umfangsrichtung und vorzugsweise horizontal erstreckende Fensteroberkante (26) oder eine sich in Umfangsrichtung und konisch nach außen und unten erstreckende Fensteroberkante (26) aufweisen, wobei die Fensteroberkanten (26) vorzugsweise um 17 bis 23 mm, bevorzugt 19 bis 21 mm vertikal von den Fensterunterkanten (25) beabstandet sind.

15. Futtertrog nach einem oder mehreren der Ansprüche 1 bis 14,
**dadurch gekennzeichnet, dass**
das untere Trichterführungsrohr (17) Stege (22) aufweist, die zwischen den Futterzuführfenstern (20) angeordnet sind, und an deren Steginnenwandungen (22a) zweckmäßigerweise jeweils mindestens eine, vorzugsweise vertikal ausgerichtete und nach innen vorstehende, Zentrierkante (23) und/oder mindestens eine, sich vorzugsweise in Umfangsrichtung erstreckende und nach innen vorstehende, Rastnase (24) angeordnet ist, wobei sich
die Rastnasen (24) vorzugsweise über die gesamte Breite in Umfangsrichtung der Stege (22) erstrecken oder wobei sich die Rastnasen (24) vorzugsweise nicht über die gesamte Breite in Umfangsrichtung der Stege (22) erstrecken, so dass jeweils seitlich von den Rastnasen (24) die Steginnenwandungen (22a) frei bleiben.

16. Futtertrog nach einem oder mehreren der Ansprüche 1 bis 15,
**dadurch gekennzeichnet, dass**
die Futterzuführfenster (20) gleichmäßig in Umfangsrichtung verteilt angeordnet sind und vorzugsweise eine Erstreckung in Umfangsrichtung von 40 bis 120°, bevorzugt von 55 bis 65° aufweisen, wobei zweckmäßigerweise 2 bis 6, bevorzugt 3 bis 5 Futterzuführfenster (20) vorgesehen sind.

17. Futtertrog nach einem oder mehreren der Ansprüche 1 bis 16,
**dadurch gekennzeichnet, dass**
der Trogtrichter (3) aus einem vorzugsweise im Wesentlichen durchsichtigen oder transluzenten Kunststoff, vorzugsweise einem Hartkunststoff, beispielsweise Polypropylen (PP) besteht und/oder durch Gießen, bevorzugt Spritzgießen oder Druckgießen hergestellt ist.

18. Futtertrog nach einem oder mehreren der Ansprüche 1 bis 17,
**dadurch gekennzeichnet, dass**
das Fallrohr (4), in vertikaler Richtung nach unten einander nachgeordnet, ein vorzugsweise zylindrisches Fallrohrführungsrohr (30), einen konisch nach außen laufenden Fallrohrübergangskegel (31) und ein, vorzugsweise im Wesentlichen zylindrisches, Fallrohrfutterzuführrohr (32) aufweist und das Fallrohr (4) vorzugsweise eine sich in vertikaler Richtung nach oben an das Fallrohrführungsrohr (30) anschließende Anschlusseinrichtung (28) mit einer durchgehenden Aufnahmeöffnung (29) zur Aufnahme und zum Anschluss an ein Förderrohr (103) eines Röhrenfütterungssystems aufweist, wobei der Außenradius des oberen Fallrohrführungsrohres (30) zweckmäßigerweise dem Radius der Führungssteginnenwandungen (77) des oberen Trichterführungsrohres (15) entspricht und wobei zweckmäßigerweise die Steigung des Fallrohrübergangskegels (31) der Steigung des Trichterübergangskegels (16) entspricht.

19. Futtertrog nach Anspruch 18,
**dadurch gekennzeichnet, dass**
der Fallrohrübergangskegel (31) und das Fallrohrfutterzuführrohr (32) den Fallrohrfutterzuführbereich (78) bilden.

20. Futtertrog nach Anspruch 18 und/oder 19,
**dadurch gekennzeichnet, dass**
das Fallrohrfutterzuführrohr (32) einen Fallrohrringsteg (33) mit einer vorzugsweise horizontalen Fallrohrringstegunterkante (70) und sich an den Fallrohrringsteg (33) anschließende, vertikal nach unten gerichtete und in Umfangsrichtung voneinander beabstandete, vorzugsweise zylinderrohrsegmentförmige, und jeweils paarweise zueinander gehörige Führungsbalken (34a, 34b) aufweist, wobei vorzugsweise die Schließsegmente (35) mit Schließsegmentinnenwandungen (72) an Führungsbalkenaußenkanten (36) angeordnet sind.

21. Futtertrog nach Anspruch 20,
**dadurch gekennzeichnet, dass**
die paarweisen Führungsbalken (34a, 34b) Führungsschienen (37) bilden.

22. Futtertrog nach Anspruch 20 und/oder 21,
**dadurch gekennzeichnet, dass**
die paarweisen Führungsbalken (34a, 34b) einander zugewandte, sich gegenüberliegende und vertikal und vorzugsweise radial nach innen erstreckende Balkenseitenführungskanten (38a, 38b) und vorzugsweise sich vertikal und vorzugsweise in Umfangsrichtung erstreckende Balkeninnenführungskanten (39) aufweisen.

23. Futtertrog nach einem oder mehreren der Ansprüche 20 bis 22,
**dadurch gekennzeichnet, dass**
der Radius der Führungsbalkenaußenkanten (36) dem Radius der Steginnenwandungen (22a) entspricht.

24. Futtertrog nach einem oder mehreren der Ansprüche 20 bis 23,
**dadurch gekennzeichnet, dass**
die Führungsbalken (34a, 34b) an ihrem unteren Ende jeweils eine Fase (40) aufweisen, deren Steigung vorzugsweise der Steigung des Rutschkegels (11) entspricht.

25. Futtertrog nach einem oder mehreren der Ansprüche 1 bis 24,
**dadurch gekennzeichnet, dass**
das Fallrohr (4) aus einem vorzugsweise im Wesentlichen durchsichtigen oder transluzenten Kunststoff, vorzugsweise einem Hartkunststoff, beispielsweise Polypropylen (PP) besteht und/oder durch Gießen, bevorzugt Spritzgießen oder Druckgießen hergestellt ist.

26. Futtertrog nach einem oder mehreren der Ansprüche 1 bis 25,
**dadurch gekennzeichnet, dass**
die Schließsegmente (35) zylinderrohrsegmentförmig ausgebildet sind.

27. Futtertrog nach einem oder mehreren der Ansprüche 1 bis 26,
**dadurch gekennzeichnet, dass**
die Schließsegmente (35) jeweils eine sich in Umfangsrichtung erstreckende und zweckmäßigerweise horizontale Schließsegmentunterkante (42) aufweisen.

28. Futtertrog nach einem oder mehreren der Ansprüche 1 bis 27,
**dadurch gekennzeichnet, dass**
die Schließsegmente (35) jeweils eine sich in Umfangsrichtung erstreckende und vorzugsweise horizontale Schließsegmentoberkante (43) oder eine sich in Umfangsrichtung erstreckende und konisch ausgerichtete Schließsegmentoberkante (43) aufweisen.

29. Futtertrog nach einem oder mehreren der Ansprüche 1 bis 28,
**dadurch gekennzeichnet, dass**
die Schließsegmente (35) jeweils zwei vertikal, und vorzugsweise radial nach innen, ausgerichtete Schließsegmentseitenkanten (41) aufweisen.

30. Futtertrog nach einem oder mehreren der Ansprüche 1 bis 29,
**dadurch gekennzeichnet, dass**
der Außenradius der Schließsegmente (35) dem Außenradius des unteren Trichterführungsrohres (17) entspricht und der Innenradius der Schließsegmente (35) vorzugsweise dem Innenradius des unteren Trichterführungsrohres (17) entspricht.

31. Futtertrog nach einem oder mehreren der Ansprüche 27 bis 30,
**dadurch gekennzeichnet, dass**
die Schließsegmente (35) mit ihren Schließsegmentunterkanten (42) mit einem unteren Ende der Führungsbalken (34a, 34b) abschließen.

32. Futtertrog nach einem oder mehreren der Ansprüche 29 bis 31,
**dadurch gekennzeichnet, dass**
die Schließsegmente (35) mit ihren Schließsegmentseitenkanten (41) bündig mit den Balkenseitenführungskanten (38a, 38b) abschließen oder dass die Schließsegmente (35) mit ihren Schließsegmentseitenkanten (41) nicht bündig mit den Balkenseitenführungskanten (38a, 38b) abschließen, sondern in Bezug zu diesen zueinander versetzt sind.

33. Futtertrog nach einem oder mehreren der Ansprüche 28 bis 32,
**dadurch gekennzeichnet, dass**
der vertikale Abstand der Schließsegmentunterkanten (42) von den Schließsegmentoberkanten (43) mindestens dem Abstand der Fensterunterkanten (25) von den Fensteroberkanten (26) entspricht.

34. Futtertrog nach einem oder mehreren der Ansprüche 1 bis 33,
**dadurch gekennzeichnet, dass**
die oberen Futterzuführöffnungen (45) sich in Umfangsrichtung erstreckende Schlitze sind, wobei die Erstreckung in Umfangsrichtung der Schließsegmente (35) zweckmäßigerweise der Erstreckung der Futterzuführfenster (20) in Umfangsrichtung und vorzugsweise die Anzahl der Schließsegmente (35) der Anzahl der Futterzuführfenster (20) entspricht.

35. Futtertrog nach einem oder mehreren der Ansprüche 28 bis 34,
**dadurch gekennzeichnet, dass**
die Futterzuführöffnungen (45) Zuführöffnungsunterkanten (43a) aufweisen, die den Schließsegmentoberkanten (43) entsprechen.

36. Futtertrog nach einem oder mehreren der Ansprüche 1 bis 35,
**dadurch gekennzeichnet, dass**
die Futterzuführöffnungen (45) sich in Umfangsrichtung erstreckende Zuführöffnungsoberkanten (46) aufweisen, die zweckmäßigerweise von der Fallrohrringstegunterkante (70) gebildet werden oder dass sich die Zuführöffnungsoberkanten (46) bogenförmig, radial nach innen und oben in den Fallrohrübergangskegel (31) hinein erstrecken, wobei vorzugsweise das obere Ende der Zuführöffnungsoberkanten (46) in einem Übergangsbereich vom Fallrohrübergangskegel (31) zu dem Fallrohrführungsrohr (30) angeordnet ist.

37. Futtertrog nach einem oder mehreren der Ansprüche 20 bis 36,
**dadurch gekennzeichnet, dass**
die Futterzuführöffnungen (45) seitlich von den Führungsbalken (34a, 34b) begrenzt werden.

38. Futtertrog nach Anspruch 36 und/oder 37,
**dadurch gekennzeichnet, dass**
die Zuführöffnungsoberkanten (46) und die Zuführöffnungsunterkanten (43a) um den selben Betrag vertikal voneinander beabstandet sind, wie die Fensteroberkanten (25) von den Fensterunterkanten (26).

39. Futtertrog nach einem oder mehreren der Ansprüche 1 bis 38,
**dadurch gekennzeichnet, dass**
die Futterzuführöffnungen (45) gleichmäßig um den Umfang des Fallrohrfutterzuführbereichs (32) verteilt sind, wobei die Anzahl der Futterzuführöffnungen (45) der Anzahl der oberen Futterzuführfenster (20) entspricht.

40. Futtertrog nach einem oder mehreren der Ansprüche 36 bis 39,
**dadurch gekennzeichnet, dass**
die Zuführöffnungsunterkanten (43a) in Bezug zu den Zuführöffnungsoberkanten (46) radial nach außen, insbesondere um den Betrag der Wanddicke des Trogtrichters (3), versetzt angeordnet sind.

41. Futtertrog nach einem oder mehreren der Ansprüche 1 bis 40,
**dadurch gekennzeichnet, dass**
das Raumstabwerk (5) einen vertikal nach unten gerichteten, zentralen Mittelstab (50) mit einer Mittelstabachse (51) und mehrere, vorzugsweise vier, sich von dem Mittelstab (50) im Wesentlichen radial nach außen und unten erstreckende, kreuzweise angeordnete, Stützstäbe (52) aufweist, die zweckmäßigerweise gleichmäßig um den Mittelstab (50) herum angeordnet sind, wobei die Anzahl der Stützstäbe (52) vorzugsweise der Anzahl der zwischen den oberen Futterzuführfenster (20) gebildeten Stege (22) entspricht.

42. Futtertrog nach Anspruch 41,
**dadurch gekennzeichnet, dass**
der Mittelstab (50) an seinem unterem Ende mindestens eine, vorzugsweise 1 bis 5, bevorzugt 2 bis 4, senkrecht zur Mittelstabachse (52) angeordnete, Durchgangsbohrungen (54) aufweist.

43. Futtertrog nach Anspruch 41 und/oder 42,
**dadurch gekennzeichnet, dass**
die Stützstäbe (52) außen endseitig, vorzugsweise im Wesentlichen zylinderwandungssegmentförmige, Führungsklötze (55) aufweisen, an deren Führungsklotzaußenwandungen (56) zweckmäßigerweise jeweils mindestens eine vertikal ausgerichtete, zu der Zentrierkante (23) des Trogtrichters (3) korrespondierende, Zentriernut (57), und zweckmäßigerweise mindestens eine horizontal ausgerichtete, zu der Rastnase (24) des Trogtrichters (3) korrespondierende Rastnut (58) vorgesehen sind, wobei der Radius der Führungsklotzaußenwandungen (56) zweckmäßigerweise dem Innenradius des unteren Trichterführungsrohres (17) bzw. der Steginnenwandungen (22a) entspricht und die Erstreckung der Führungsklotzaußenwandungen (56) in Umfangsrichtung zweckmäßigerweise der Erstreckung der Rastnasen (24) des Trogtrichters (3) in Umfangsrichtung entspricht.

44. Futtertrog nach Anspruch 43,
**dadurch gekennzeichnet, dass**
die Führungsklötze (55) jeweils beidseitig vertikal und vorzugsweise radial nach innen ausgerichtete Klotzseitenführungskanten (60a, 60b) aufweisen.

45. Futtertrog nach Anspruch 43 und/oder 44,
**dadurch gekennzeichnet, dass**
die Führungsklötze (55) jeweils beidseitig im Wesentlichen rechtwinklige, sich vertikal erstreckende Stufenabsätze (59) aufweisen, wodurch außenseitige, sich vertikal und zweckmäßigerweise in Umfangsrichtung erstreckende Klotzaußenführungskanten (61a, 61b) gebildet werden, wobei der Radius der Klotzaußenführungskanten (61a, 61b) vorzugsweise dem Radius der Balkeninnenführungskanten (39) entspricht.

46. Futtertrog nach Anspruch 44 und/oder 45,
**dadurch gekennzeichnet, dass**
der Abstand der Klotzseitenführungskanten (60a, 60b) in Umfangsrichtung dem Abstand der Balkenseitenführungskanten (38a, 38b) in Umfangsrichtung entspricht.

47. Futtertrog nach einem oder mehreren der Ansprüche 1 bis 46,
**dadurch gekennzeichnet, dass**
das Raumstabwerk (5) aus einem Kunststoff, vorzugsweise einem Hartkunststoff, beispielsweise Polyoxymethylen (POM) besteht und/oder durch Gießen, bevorzugt Spritzgießen oder Druckgießen hergestellt ist.

48. Futtertrog nach einem oder mehreren der Ansprüche 1 bis 47,
**dadurch gekennzeichnet, dass**
das Raumstabwerk (5) um die Futtertrogmittelachse (102) frei drehbar, horizontal unverschieblich und vorzugsweise vertikal verschieblich mit der Bodenschale (2) in Verbindung steht.

49. Futtertrog nach einem oder mehreren der Ansprüche 1 bis 48,
**dadurch gekennzeichnet, dass**
der Trogtrichter (3) über das Raumstabwerk (5) mit der Bodenschale (2) vertikal und horizontal unverschieblich und vorzugsweise um die Futtertrogmittelachse (102) frei drehbar in Verbindung steht.

50. Futtertrog nach einem oder mehreren der Ansprüche 41 bis 49,
**dadurch gekennzeichnet, dass**
der Mittelstab (50) in der Aufnahmehülse (13) der Bodenschale (2) derart angeordnet ist, dass die Mittelstabachse (51) mit der Futtertrogmittelachse (102) zusammenfällt.

51. Futtertrog nach einem oder mehreren der Ansprüche 43 bis 50,
**dadurch gekennzeichnet, dass**
die Stützstäbe (52) mit ihren Zentriernuten (57) in den korrespondierenden Zentrierkanten (23) des Trogtrichters (3) angeordnet sind.

52. Futtertrog nach einem oder mehreren der Ansprüche 43 bis 51,
**dadurch gekennzeichnet, dass**
die Stützstäbe (52) mit ihren Rastnuten (58) mit den Rastnasen (24) des Trogtrichters (3) verrastet sind.

53. Futtertrog nach einem oder mehreren der Ansprüche 43 bis 52,
**dadurch gekennzeichnet, dass**
die Führungsklotzaußenwandungen (56) an den Steginnenwandungen (22a) anliegen und vorzugsweise die Klotzseitenführungskanten (60a, 60b) radial fluchtend zu den Fensterseitenkanten (27) angeordnet sind.

54. Futtertrog nach einem oder mehreren der Ansprüche 43 bis 53,
**dadurch gekennzeichnet, dass**
das Fallrohr (4) mit seinen paarweisen Führungsbalken (34a, 34b) auf den Führungsklötzen (55) des Raumstabwerks vertikal verschieblich zu diesem gelagert ist.

55. Futtertrog nach Anspruch 54,
**dadurch gekennzeichnet, dass**
die Balkenseitenführungskanten (38a, 38b) an den Klotzseitenführungskanten (60a, 60b) anliegen.

56. Futtertrog nach Anspruch 54 und/oder 55,
**dadurch gekennzeichnet, dass**
die Balkeninnenführungskanten (39) an den Klotzaußenführungskanten (61a, 61b) anliegen.

57. Futtertrog nach einem oder mehreren der Ansprüche 54 bis 56,
**dadurch gekennzeichnet, dass**
die Balkenaußenführungskanten (36) seitlich von den Rastnasen (24) an den Steginnenwandungen (22a), insbesondere formschlüssig, anliegen.

58. Futtertrog nach einem oder mehreren der Ansprüche 24 bis 57,
**dadurch gekennzeichnet, dass**
in der unteren Stellung des Fallrohres die Fasen (40) der Führungsbalken (34a, 34b) und vorzugsweise die Schließsegmentunterkanten (42) auf der Bodenwandungsoberfläche (8) des Rutschkegels (11) aufsitzen.

59. Futtertrog nach einem oder mehreren der Ansprüche 9 bis 58,
**dadurch gekennzeichnet, dass**
in der unteren Stellung des Fallrohres (4) die Scharrflügel (19) vollständig von Futter (100) bedeckt sind.

60. Futtertrog nach einem oder mehreren der Ansprüche 28 bis 59,
**dadurch gekennzeichnet, dass**
in der oberen Stellung des Fallrohres die Schließsegmentoberkanten (43) an den Fensteroberkanten (26), insbesondere formschlüssig, anliegen.

61. Futtertrog nach einem oder mehreren der Ansprüche 29 bis 60,
**dadurch gekennzeichnet, dass**
in der oberen Stellung des Fallrohres (4) die Schließsegmentsseitenkanten (41) an den Fensterseitenkanten (27), insbesondere formschlüssig, anliegen.

62. Futtertrog nach einem oder mehreren der Ansprüche 27 bis 61,
**dadurch gekennzeichnet, dass**
in der oberen Stellung des Fallrohres (4) die Schließsegmentunterkanten (46) in etwa auf Höhe der Fensterunterkanten (25) angeordnet sind, so dass die Schließsegmente (35) mit ihren Schließsegmentaußenwandungen (73) an den Fensterunterkanten (25) anliegen.

63. Futtertrog nach einem oder mehreren der Ansprüche 1 bis 62,
**dadurch gekennzeichnet, dass**
in der oberen Stellung des Fallrohres (4) ein kegeliger bzw. konischer Futterpegel (79) gebildet wird, der zweckmäßigerweise in etwa bis zu einer Fresskante (12) reicht.

## Claims

1. Feeding trough for the rearing of poultry, comprising
a) a floor pan (2), which has a bottom wall (7) having a slip cone (11) directed conically upwards and tapering off to a vertical feeding trough centre axis (102),
b) a drop tube (4), the middle of which is arranged centrally over the floor pan (2) and such that it is vertically displaceable relative to the latter and which, at a lower drop tube fodder supply region (32), has upper fodder supply openings (45),
c) a trough hopper (3), the middle of which is arranged centrally over the floor pan (2) and is connected to the floor pan (2) - preferably in a vertically displaceable manner - and has a hopper guide tube (17) adjoined in the vertically downward direction by a conically outwardly directed fodder-directing cone (18), fodder supply windows (20) being provided in the hopper guide tube (17) and a lower fodder supply opening (67) being formed between a fodder-directing cone bottom edge (66) and the bottom wall (7),
wherein
d) the drop tube (4) is arranged within the trough hopper (3) and is connected thereto in a vertically displaceable manner,
e) in an upper setting of the drop tube (4) relative to the trough hopper (3), the lower fodder supply opening (67) is open, and
f) in a lower setting of the drop tube (4) relative to the trough hopper (3), the fodder supply openings (45) and fodder supply windows (20) are arranged opposite one another and form fodder passages (75),
**characterized in that**
g) the feeding trough has a three-dimensional or connecting rod assembly (5), which is arranged within the feeding trough (3) and is connected thereto in a non-displaceable and non-twistable manner and which is connected to the drop tube (4) in a vertically displaceable, horizontally non-displaceable and non-twistable manner, and
h) the drop tube (4) has closing segments (35), which are arranged below the upper fodder supply openings (45) and which, in the upper setting of the drop tube (4) relative to the trough hopper (3), occlude the fodder supply windows (20).

2. Feeding trough according to Claim 1, **characterized in that**, in the lower setting of the drop tube (4), supply opening bottom edges (43a) of the fodder supply openings (45) lie substantially level with window bottom edges (25) of the fodder supply windows (20).

3. Feeding trough according to Claim 1 and/or 2, **characterized in that**, in the lower setting of the drop tube (4), the upper fodder supply openings (45) lie in radial alignment with the fodder supply windows (20).

4. Feeding trough according to one or more of Claims 1 to 3, **characterized in that** an annular gap (65) is formed between a bottom wall surface (8) of the slip cone (11) and a fodder-directing cone bottom side (64).

5. Feeding trough according to one or more of Claims 1 to 4, **characterized in that** the floor pan (2) has an upright, substantially vertically upwardly directed peripheral wall (6) having an upper peripheral rim (6a), the bottom wall (7) passing via a concave bottom wall channel or fodder recess (10) from the peripheral wall (6) into the slip cone (11).

6. Feeding trough according to one or more of Claims 1 to 5, **characterized in that** the bottom wall (7), at the upper end of the slip cone (11), is tucked in inwards and downwards in such a way that a receiving sleeve (13) is formed, which is aligned vertically downwards and, expediently, concentrically to the feeding trough centre axis (102) and preferably has an upper butt collar (13a) at an upper opening and a lower butt collar (13b) at a lower opening, stiffening ribs (14) expediently being provided between a bottom wall bottom face (9) and a sleeve outer wall (74).

7. Feeding trough according to one or more of Claims 1 to 6, **characterized in that** the floor pan (2) consists of plastic, preferably a hard plastic, for example high-density polyethylene (HDPE) and/or polyethylene (PE), and/or is produced by moulding, preferably compression moulding or injection moulding.

8. Feeding trough according to one or more of Claims 1 to 7, **characterized in that** the trough hopper (3) has, arranged respectively one after the other downwards in the vertical direction, an upper, preferably cylindrical hopper guide tube (15), an upper hopper transition cone (16), directed conically radially outwards, the lower, preferably cylindrical hopper guide tube (17), and the fodder-directing cone (18).

9. Feeding trough according to one or more of Claims 1 to 8, **characterized in that**, at the lower end of the fodder-directing cone (18), distributed, preferably evenly, around the whole of the periphery, scraping blades (19) are arranged, preferably 9 to 15, particularly preferably 11 to 13, scraping blades being provided.

10. Feeding trough according to Claim 8 and/or 9, **characterized in that** on a hopper inner wall (3b), in the region of the upper hopper guide tube (15), guide webs (76), which are vertically aligned and, expediently, are evenly distributed in the peripheral direction, having guide web inner walls (77), are arranged.

11. Feeding trough according to one or more of Claims 1 to 10, **characterized in that** the fodder supply windows (20) are configured as slots extending in the peripheral direction.

12. Feeding trough according to one or more of Claims 1 to 11, **characterized in that** the fodder supply windows (20) respectively have a window bottom edge (25) extending in the peripheral direction and, preferably, vertically, the radius of which expediently corresponds to the outer radius of the lower hopper guide tube (17), the window bottom edges (25) preferably being arranged in a transition region (21) from the lower hopper guide tube (17) to the fodder-directing cone (18).

13. Feeding trough according to one or more of Claims 1 to 12, **characterized in that** the fodder supply windows (20) respectively have two window lateral guide edges (27), which are aligned vertically and, preferably, radially inwards.

14. Feeding trough according to one or more of Claims 1 to 13, **characterized in that** the fodder supply windows (20) respectively have a window top edge (26), which extends in the peripheral direction and, preferably, horizontally, and a window top edge (26), which extends in the peripheral direction and conically outwards and downwards, the window top edges (26) preferably being distanced 17 to 23 mm, preferably 19 to 21 mm, vertically away from the window bottom edges (25).

15. Feeding trough according to one or more of Claims 1 to 14, **characterized in that** the lower hopper guide tube (17) has webs (22), which are arranged between the fodder supply windows (20) and on the web inner walls (22a) of which there is/are expediently respectively arranged at least one, preferably vertically aligned and inwardly projecting centring edge (23), and/or at least one, preferably peripherally extending and inwardly projecting latching boss (24), the latching bosses (24) preferably extending over the entire width in the peripheral direction of the webs (22), or the latching bosses (24) preferably extending not over the entire width in the peripheral direction of the webs (22), so that, to the side of the latching bosses (24), the web inner walls (22a) respectively remain free.

16. Feeding trough according to one or more of Claims 1 to 15, **characterized in that** the fodder supply windows (20) are arranged evenly distributed in the peripheral direction and preferably have an extent in the peripheral direction from 40 to 120°, particularly preferably from 55 to 65°, expediently 2 to 6, preferably 3 to 5, fodder supply windows (20) being provided.

17. Feeding trough according to one or more of Claims 1 to 16, **characterized in that** the trough hopper (3) consists of a preferably substantially transparent or translucent plastic, preferably a hard plastic, for example polypropylene (PP), and/or is produced by moulding, preferably injection moulding or compression moulding.

18. Feeding trough according to one or more of Claims 1 to 17, **characterized in that** the drop tube (4) has, arranged one after the other downwards in the vertical direction, a preferably cylindrical drop tube guide tube (30), a drop tube transition cone (31), running conically outwards, and a, preferably substantially cylindrical, drop tube fodder supply tube (32), and the drop tube (4) preferably has a connecting device (28), which adjoins the drop tube guide tube (30) upwards in the vertical direction and has a continuous receiving opening (29) for receiving and connecting to a feed pipe (103) of a tubular feeding system, the outer radius of the upper drop tube guide tube (30) expediently corresponding to the radius of the guide web inner walls (77) of the upper hopper guide tube (15) and, expediently, the gradient of the drop tube transition cone (31) corresponding to the gradient of the hopper transition cone (16).

19. Feeding trough according to Claim 18, **characterized in that** the drop tube transition cone (31) and the drop tube fodder supply tube (32) form the drop tube fodder supply region (78).

20. Feeding trough according to Claim 18 and/or 19, **characterized in that** the drop tube fodder supply tube (32) has a drop tube ring web (33), having a preferably horizontal drop tube ring web bottom edge (70), and respectively paired guide bars (34a, 34b), preferably in the shape of a cylinder liner segment, which adjoin the drop tube ring web (33), are directed vertically downwards, and are spaced apart in the peripheral direction, the closing segments (35) preferably being arranged with closing segment inner walls (72) against guide bar outer edges (36).

21. Feeding trough according to Claim 20, **characterized in that** the paired guide bars (34a, 34b) form guide rails (37).

22. Feeding trough according to Claim 20 and/or 21, **characterized in that** the paired guide bars (34a, 34b) have bar lateral guide edges (38a, 38b), which are mutually facing and mutually opposing and extend preferably radially inwards, and bar inner guide edges (39), which preferably extend vertically and preferably in the peripheral direction.

23. Feeding trough according to one or more of Claims 20 to 22, **characterized in that** the radius of the guide bar outer edges (36) corresponds to the radius of the web inner walls (22a).

24. Feeding trough according to one or more of Claims 20 to 23, **characterized in that** the guide bars (34a, 34b) each have at their lower end a bevel (40), the gradient of which preferably corresponds to the gradient of the slip cone (11).

25. Feeding trough according to one or more of Claims 1 to 24, **characterized in that** the drop tube (4) consists of a preferably substantially transparent or translucent plastic, preferably a hard plastic, for example polypropylene (PP), and/or is produced by moulding, preferably injection moulding or compression moulding.

26. Feeding trough according to one or more of Claims 1 to 25, **characterized in that** the closing segments (35) are configured in the shape of a cylinder liner segment.

27. Feeding trough according to one or more of Claims 1 to 26, **characterized in that** the closing segments (35) respectively have an expediently horizontal closing segment bottom edge (42) extending in the peripheral direction.

28. Feeding trough according to one or more of Claims 1 to 27, **characterized in that** the closing segments (35) respectively have a preferably horizontal closing segment top edge (43) extending in the peripheral direction, or a conically aligned closing segment top edge (43) extending in the peripheral direction.

29. Feeding trough according to one or more of Claims 1 to 28, **characterized in that** the closing segments (35) respectively have two closing segment side edges (41), which are preferably aligned radially inwards.

30. Feeding trough according to one or more of Claims 1 to 29, **characterized in that** the outer radius of the closing segments (35) corresponds to the outer radius of the lower hopper guide tube (17), and the inner radius of the closing segments (35) preferably corresponds to the inner radius of the lower hopper guide tube (17).

31. Feeding trough according to one or more of Claims 27 to 30, **characterized in that** the closing segments (35), with their closing segment bottom edges (42), terminate flush with a lower end of the guide bars (34a, 34b).

32. Feeding trough according to one or more of Claims 29 to 31, **characterized in that** the closing segments (35), with their closing segment side edges (41), terminate flush with the bar lateral guide edges (38a, 38b), or **in that** the closing segments (35), with their closing segment side edges (41), do not terminate flush with the bar lateral guide edges (38a, 38b), but are mutually offset in relation thereto.

33. Feeding trough according to one or more of Claims 28 to 32, **characterized in that** the vertical distance of the closing segment bottom edges (42) from the closing segment top edges (43) corresponds at least to the distance of the window bottom edges (25) from the window top edges (26).

34. Feeding trough according to one or more of Claims 1 to 33, **characterized in that** the upper fodder supply openings (45) are slots extending in the peripheral direction, the extent in the peripheral direction of the closing segments (35) expediently corresponding to the extent of the fodder supply windows (20) in the peripheral direction, and the number of closing segments (35) preferably corresponding to the number of fodder supply windows (20).

35. Feeding trough according to one or more of Claims 28 to 34, **characterized in that** the fodder supply openings (45) have supply opening bottom edges (43a), which correspond to the closing segment top edges (43).

36. Feeding trough according to one or more of Claims 1 to 35, **characterized in that** the fodder supply openings (45) have supply opening top edges (46) extending in the peripheral direction, which expediently are formed by the drop tube ring web bottom edge (70), or **in that** the supply opening top edges (46) extend in an arc shape radially inwards and upwards into the drop tube transition cone (31), the upper end of the supply opening top edges (46) preferably being arranged in a transition region from the drop tube transition cone (31) to the drop tube guide tube (30).

37. Feeding trough according to one or more of Claims 20 to 36, **characterized in that** the fodder supply openings (45) are laterally delimited by the guide bars (34a, 34b).

38. Feeding trough according to Claim 36 and/or 37, **characterized in that** the supply opening top edges (46) and the supply opening bottom edges (43a) are spaced vertically apart by the same amount as the window top edges (25) from the window bottom edges (26).

39. Feeding trough according to one or more of Claims 1 to 38, **characterized in that** the fodder supply openings (45) are distributed evenly around the periphery of the drop tube fodder supply region (32), the number of fodder supply openings (45) corresponding to the number of upper fodder supply windows (20).

40. Feeding trough according to one or more of Claims 36 to 39, **characterized in that** the supply opening bottom edges (43a) are arranged offset radially outwards in relation to the supply opening top edges (46), in particular by the amount of the wall thickness of the trough hopper (3).

41. Feeding trough according to one or more of Claims 1 to 40, **characterized in that** the three-dimensional rod assembly (5) has a vertically downwardly directed, central middle rod (50), having a middle rod axis (51), and a plurality of, preferably four, crosswise supporting rods (52), which extend substantially radially outwards and downwards from the middle rod (50) and which expediently are arranged evenly around the middle rod (50), the number of supporting rods (52) preferably corresponding to the number of webs (22) formed between the upper fodder supply windows (20).

42. Feeding trough according to Claim 41, **characterized in that** the middle rod (50) has at its lower end at least one, preferably 1 to 5, particularly preferably 2 to 4, pass-through bores (54) arranged perpendicularly to the middle rod axis (52).

43. Feeding trough according to Claim 41 and/or 42, **characterized in that** the supporting rods (52) have, on the outer side of their end face, guide blocks (55) substantially in the shape of a cylinder wall segment, on the guide block outer walls (56) of which, expediently, respectively at least one vertically aligned centring groove (57), corresponding with the centring edge (23) of the trough hopper (3), and expediently at least one horizontally aligned latching groove (58), corresponding with the latching boss (24) of the trough hopper (3), the radius of the guide block outer walls (56) expediently corresponding to the inner radius of the lower hopper guide tube (17) and of the web inner walls (22a), and the extent of the guide block outer walls (56) in the peripheral direction expediently corresponding to the extent of the latching bosses (24) of the trough hopper (3) in the peripheral direction.

44. Feeding trough according to Claim 43, **characterized in that** the guide blocks (55) have respectively on both sides block lateral guide edges (60a, 60b), which are aligned vertically and, preferably, radially inwards.

45. Feeding trough according to Claim 43 and/or 44, **characterized in that** the guide blocks (55) have respectively on both sides substantially right-angled, vertically extending stepped offsets (59), whereby outer-side block outer guide edges (61a, 61b), extending vertically and, expediently, in the peripheral direction, are formed, the radius of the block outer guide edges (61a, 61b) preferably corresponding to the radius of the bar inner guide edges (39).

46. Feeding trough according to Claim 44 and/or 45, **characterized in that** the distance apart of the block lateral guide edges (60a, 60b) in the peripheral direction corresponds to the distance apart of the bar lateral guide edges (38a, 38b) in the peripheral direction.

47. Feeding trough according to one or more of Claims 1 to 46, **characterized in that** the three-dimensional rod assembly (5) consists of a plastic, preferably a hard plastic, for example polyoxymethylene (POM), and/or is produced by moulding, preferably injection moulding or compression moulding.

48. Feeding trough according to one or more of Claim 1 to 47, **characterized in that** the three-dimensional rod assembly (5) is connected to the floor pan (2) such that it is freely rotatable about the feeding trough centre axis (102), is horizontally non-displaceable and, preferably, is vertically displaceable.

49. Feeding trough according to one or more of Claim 1 to 48, **characterized in that** the trough hopper (3) is connected by the three-dimensional rod assembly (5) to the floor pan (2) such that it is vertically and horizontally non-displaceable and is preferably freely rotatable about the feeding trough centre axis (102).

50. Feeding trough according to one or more of Claims 41 to 49, **characterized in that** the middle rod (50) is arranged in the receiving sleeve (13) of the floor pan (2) such that the middle rod axis (51) coincides with the feeding trough centre axis (102).

51. Feeding trough according to one or more of Claims 43 to 50, **characterized in that** the supporting rods (52) are arranged with their centring grooves (57) in the corresponding centring edges (23) of the trough hopper (3).

52. Feeding trough according to one or more of Claims 43 to 51, **characterized in that** the supporting rods (52) are latching-locked with their latching grooves (58) to the latching bosses (24) of the trough hopper (3).

53. Feeding trough according to one or more of Claims 43 to 52, **characterized in that** the guide block outer walls (56) bear against the web inner walls (22a) and, preferably, the block lateral guide edges (60a, 60b) are arranged in radial alignment with the window side edges (27).

54. Feeding trough according to one or more of Claims 43 to 53, **characterized in that** the drop tube (4) is mounted with its paired guide bars (34a, 34b) on the guide blocks (55) of the three-dimensional rod assembly such that it is vertically displaceable relative to this latter.

55. Feeding trough according to Claims 54, **characterized in that** the bar lateral guide edges (38a, 38b) bear against the block lateral guide edges (60a, 60b).

56. Feeding trough according to Claims 54 and/or 55, **characterized in that** the bar inner guide edges (39) bear against the block outer guide edges (61a, 61b).

57. Feeding trough according to one or more of Claims 54 to 56, **characterized in that**, to the side of the latching bosses (24), the bar outer guide edges (36) bear, in particular positively, against the web inner walls (22a).

58. Feeding trough according to one or more of Claims 24 to 57, **characterized in that**, in the lower setting of the drop tube, the bevels (40) of the guide bars (34a, 34b), and preferably the closing segment bottom edges (42), are seated on the bottom wall surface (8) of the slip cone (11).

59. Feeding trough according to one or more of Claims 9 to 58, **characterized in that**, in the lower setting of the drop tube (4), the scraping blades (19) are fully covered by fodder (100).

60. Feeding trough according to one or more of Claims 28 to 59, **characterized in that**, in the upper setting of the drop tube, the closing segment top edges (43) bear, in particular positively, against the window top edges (26).

61. Feeding trough according to one or more of Claims 29 to 60, **characterized in that**, in the upper setting of the drop tube (4), the closing segment side edges (41) bear, in particular positively, against the window side edges (27).

62. Feeding trough according to one or more of Claims 27 to 61, **characterized in that**, in the upper setting of the drop tube (4), the closing segment bottom edges (46) are arranged roughly level with the window bottom edges (25), so that the closing segments (35) bear with their closing segment outer walls (73) against the window bottom edges (25).

63. Feeding trough according to one or more of Claims 1 to 62, **characterized in that**, in the upper setting of the drop tube (4), a cone-shaped or conical fodder level (79) is formed, which expediently reaches roughly up to a feeding edge (12).

## Revendications

1. Mangeoire pour l'élevage des volailles,
comprenant :
a) une coque formant fond (2), qui présente une paroi de fond (7) avec un cône de glissement (11) se rétrécissant coniquement vers le haut et se terminant au niveau d'un axe médian vertical (102) de la mangeoire,
b) un tube de descente (4) disposé au milieu centralement au-dessus de la coque formant fond (2) et disposé de manière déplaçable verticalement en translation par rapport à celle-ci, qui présente des ouvertures supérieures d'apport en aliments (45) dans une région inférieure (32) d'apport en aliments du tube de descente,
c) une trémie de mangeoire (3) disposée au milieu centralement au-dessus de la coque formant fond (2) et connectée à la coque formant fond (2), de préférence de manière déplaçable verticalement en translation, comprenant un tube de guidage de trémie (17), auquel se raccorde, verticalement vers le bas, un cône de conduite des aliments (18) orienté coniquement vers l'extérieur, des fenêtres d'apport en aliments (20) étant prévues dans le tube de guidage de trémie (17) et une ouverture inférieure d'apport en aliments (67) étant formée entre un bord inférieur (66) du cône de conduite des aliments et la paroi de fond (7),
d) le tube de descente (4) étant disposé à l'intérieur de la trémie de mangeoire (3) et étant en liaison avec celle-ci par translation verticale,
e) l'ouverture inférieure d'apport en aliments (67) étant ouverte dans une position supérieure du tube de descente (4) par rapport à la trémie de mangeoire (3), et
f) les ouvertures d'apport en aliments (45) et les fenêtres d'apport en aliments (20) étant en regard les unes des autres dans une position inférieure du tube de descente (4) par rapport à la trémie de mangeoire (3) et formant des passages pour les aliments (75),
**caractérisée en ce que**
g) la mangeoire présente un mécanisme de barres spatiales ou de barres de connexion (5), qui est disposé à l'intérieur de la trémie de mangeoire (3) et qui est relié avec elle de manière non déplaçable et non rotative, et qui est relié avec le tube de descente (4) de manière déplaçable en translation verticalement mais pas horizontalement et de manière non rotative, et
h) le tube de descente (4) présente des segments de fermeture (35) disposés sous les ouvertures supérieures d'apport en aliments (45), qui ferment les fenêtres d'apport en aliments (20) par rapport à la trémie de mangeoire (3) dans la position supérieure du tube de descente (4).

2. Mangeoire selon la revendication 1,
**caractérisée en ce que**
dans la position inférieure du tube de descente (4), des bords inférieurs (43a) des ouvertures d'apport en aliments (45) se situent essentiellement à la hauteur des bords inférieurs (25) des fenêtres d'apport en aliments (20).

3. Mangeoire selon la revendication 1 et/ou 2,
**caractérisée en ce que**
dans la position inférieure du tube de descente (4), les ouvertures supérieures d'apport en aliments (45) se situent radialement en affleurement avec les fenêtres d'apport en aliments (20).

4. Mangeoire selon l'une quelconque ou plusieurs des revendications 1 à 3,
**caractérisée en ce**
**qu'**une fente annulaire (65) est formée entre une surface de paroi de fond (8) du cône de glissement (11) et un côté inférieur (64) du cône de conduite des aliments.

5. Mangeoire selon l'une quelconque ou plusieurs des revendications 1 à 4,
**caractérisée en ce que**
la coque formant fond (2) présente une paroi périphérique (6) redressée, orientée essentiellement verticalement vers le haut, avec un bord périphérique supérieur (6a), la paroi de fond (7) se prolongeant dans le cône de glissement (11) par le biais d'une rigole de paroi de fond concave ou d'une cavité pour aliments (10) depuis la paroi périphérique (6).

6. Mangeoire selon l'une quelconque ou plusieurs des revendications 1 à 5,
**caractérisée en ce que**
la paroi de fond (7) est recourbée vers le bas et vers l'intérieur à l'extrémité supérieure du cône de glissement (11) de telle sorte qu'une douille de réception (13) orientée verticalement vers le bas et, de manière appropriée, concentriquement par rapport à l'axe médian (102) de la mangeoire, soit formée de préférence avec un épaulement de transition supérieur (13a) au niveau d'une ouverture supérieure et un épaulement de transition inférieur (13b) au niveau d'une ouverture inférieure, des nervures de renforcement (14) étant avantageusement prévues entre une surface inférieure (9) de la paroi de fond et une paroi extérieure de la douille (74).

7. Mangeoire selon l'une quelconque ou plusieurs des revendications 1 à 6,
**caractérisée en ce que**
la coque formant fond (2) se compose de plastique, de préférence d'un plastique dur, par exemple de polyéthylène haute densité (HDPE) et/ou de polyéthylène (PE), et/ou est fabriquée par moulage, de préférence par moulage sous pression ou par moulage par injection.

8. Mangeoire selon l'une quelconque ou plusieurs des revendications 1 à 7,
**caractérisée en ce que**
la trémie de mangeoire (3) présente à chaque fois, dans la direction verticale, les uns en dessous des autres, un tube de guidage de trémie supérieur (15), de préférence cylindrique, un cône de transition de trémie supérieur (16) orienté coniquement et radialement vers l'extérieur, le tube de guidage de trémie inférieur (17), de préférence cylindrique, et le cône de conduite des aliments (18).

9. Mangeoire selon l'une quelconque ou plusieurs des revendications 1 à 8,
**caractérisée en ce que**
des ailettes à soc (19) réparties sur toute la périphérie, de préférence uniformément, sont disposées à l'extrémité inférieure du cône de conduite des aliments (18), de préférence 9 à 15, de préférence 11 à 13 ailettes à soc étant prévues.

10. Mangeoire selon la revendication 8 et/ou 9,
**caractérisée en ce que**
l'on dispose sur une paroi intérieure (3b) de la trémie, dans la région du tube de guidage de trémie supérieur (15), des nervures de guidage (76) orientées verticalement, et avantageusement réparties uniformément dans la direction périphérique, avec des parois intérieures (77) de nervures de guidage.

11. Mangeoire selon l'une quelconque ou plusieurs des revendications 1 à 10,
**caractérisée en ce que**
les fenêtres d'apport en aliments (20) sont réalisées sous forme de fentes s'étendant dans la direction périphérique.

12. Mangeoire selon l'une quelconque ou plusieurs des revendications 1 à 11,
**caractérisée en ce que**
les fenêtres d'apport en aliments (20) présentent à chaque fois un bord de fenêtre inférieur (25) s'étendant dans la direction périphérique et de préférence verticalement, dont le rayon correspond avantageusement au rayon extérieur du tube de guidage inférieur de trémie (17), les bords de fenêtre inférieurs (25) étant de préférence disposés dans une région de transition (21) du tube de guidage inférieur de trémie (17) au cône de conduite des aliments (18).

13. Mangeoire selon l'une quelconque ou plusieurs des revendications 1 à 12,
**caractérisée en ce que**
les fenêtres d'apport en aliments (20) présentent à chaque fois deux bords de guidage latéraux de fenêtres (27) verticaux, et de préférence orientés radialement vers l'intérieur.

14. Mangeoire selon l'une quelconque ou plusieurs des revendications 1 à 13,
**caractérisée en ce que**
les fenêtres d'apport en aliments (20) présentent à chaque fois un bord de fenêtre supérieur (26) s'étendant dans la direction périphérique et de préférence horizontalement, ou un bord de fenêtre supérieur (26) s'étendant dans la direction périphérique et coniquement vers l'extérieur et vers le bas, les bords de fenêtre supérieurs (26) étant de préférence espacés verticalement des bords de fenêtre inférieurs (25) de 17 à 23 mm, de préférence de 19 à 21 mm.

15. Mangeoire selon l'une quelconque ou plusieurs des revendications 1 à 14,
**caractérisée en ce que**
le tube de guidage inférieur de trémie (17) présente des nervures (22) qui sont disposées entre les fenêtres d'apport en aliments (20), et sur les parois intérieures de nervures (22a) desquelles est disposé de manière avantageuse à chaque fois au moins un bord de centrage (23) de préférence orienté verticalement et saillant vers l'intérieur, et/ou au moins un nez d'encliquetage (24) s'étendant de préférence dans la direction périphérique et saillant vers l'intérieur, les nez d'encliquetage (24) s'étendant de préférence sur toute la largeur dans la direction périphérique des nervures (22) ou les nez d'encliquetage (24) ne s'étendant de préférence pas sur toute la largeur dans la direction périphérique des nervures (22), de sorte qu'à chaque fois, les parois intérieures de nervures (22a) restent libres latéralement par rapport aux nez d'encliquetage (24).

16. Mangeoire selon l'une quelconque ou plusieurs des revendications 1 à 15,
**caractérisée en ce que**
les fenêtres d'apport en aliments (20) sont disposées de manière répartie uniformément dans la direction périphérique et présentent de préférence une étendue dans la direction périphérique de 40 à 120°, de préférence de 55 à 65 ° , et de préférence 2 à 6, de préférence 3 à 5 fenêtres d'apport en aliments (20) étant en l'occurrence prévues.

17. Mangeoire selon l'une quelconque ou plusieurs des revendications 1 à 16,
**caractérisée en ce que**
la trémie de mangeoire (3) se compose d'un plastique de préférence sensiblement transparent ou translucide, de préférence un plastique dur, par exemple du polypropylène (PP) et/ou est fabriquée par moulage, de préférence par moulage par injection ou par moulage sous pression.

18. Mangeoire selon l'une quelconque ou plusieurs des revendications 1 à 17,
**caractérisée en ce que**
le tube de descente (4) présente, dans la direction verticale, les uns en dessous des autres, un tube de guidage du tube de descente (30) de préférence cylindrique, un cône de transition du tube de descente (31) s'étendant coniquement vers l'extérieur et un tube d'apport en aliments au tube de descente (32), de préférence essentiellement cylindrique, et le tube de descente (4) présente de préférence un dispositif de raccordement (28) se raccordant dans la direction verticale vers le haut au tube de guidage du tube de descente (30), avec une ouverture de réception continue (29) pour recevoir et assurer le raccordement à un tube de transport (103) d'un système d'alimentation par tubes, le rayon extérieur du tube de guidage supérieur du tube de descente (30) correspondant de manière avantageuse au rayon des parois intérieures des nervures de guidage (77) du tube de guidage de trémie supérieur (15) et de manière appropriée, la pente du cône de transition du tube de descente (31) correspondant à la pente du cône de transition de trémie (16).

19. Mangeoire selon la revendication 18,
**caractérisée en ce que**
le cône de transition du tube de descente (31) et le tube d'apport en aliments du tube de descente (32) forment la région d'apport en aliments du tube de descente (78).

20. Mangeoire selon la revendication 18 et/ou 19,
**caractérisée en ce que**
le tube d'apport en aliments du tube de descente (32) présente une nervure annulaire du tube de descente (33) avec un bord inférieur (70) de nervure annulaire du tube de descente de préférence horizontal et des structures de guidage (34a, 34b) se raccordant à la nervure annulaire du tube de descente (33), orientées verticalement vers le bas et espacées les unes des autres dans la direction périphérique, de préférence en forme de segments tubulaires cylindriques, et assemblées à chaque fois par paires, les segments de fermeture (35) étant de préférence disposés avec les parois intérieures des segments de fermeture (72) contre les bords extérieurs (36) des structures de guidage.

21. Mangeoire selon la revendication 20,
**caractérisée en ce que**
les structures de guidage appariées (34a, 34b) forment des rails de guidage (37).

22. Mangeoire selon la revendication 20 et/ou 21,
**caractérisée en ce que**
les structures de guidage appariées (34a, 34b) présentent des bords de guidage latéraux des structures (38a, 38b) tournés l'un vers l'autre, opposés, et s'étendant verticalement et de préférence radialement vers l'intérieur, et de préférence des bords de guidage intérieurs des structures (39) s'étendant verticalement et de préférence dans la direction périphérique.

23. Mangeoire selon l'une quelconque ou plusieurs des revendications 20 à 22,
**caractérisée en ce que**
le rayon des bords extérieurs des structures de guidage (36) correspond au rayon des parois intérieures des nervures (22a).

24. Mangeoire selon l'une quelconque ou plusieurs des revendications 20 à 23,
**caractérisée en ce que**
les structures de guidage (34a, 34b) présentent, à leur extrémité inférieure, à chaque fois un chanfrein (40) dont la pente correspond de préférence à la pente du cône de glissement (11).

25. Mangeoire selon l'une quelconque ou plusieurs des revendications 1 à 24,
**caractérisée en ce que**
le tube de descente (4) se compose d'un plastique de préférence essentiellement transparent ou translucide, de préférence un plastique dur, par exemple du polypropylène (PP) et/ou est fabriqué par moulage, de préférence par moulage sous pression ou par moulage par injection.

26. Mangeoire selon l'une quelconque ou plusieurs des revendications 1 à 25,
**caractérisée en ce que**
les segments de fermeture (35) sont réalisés en forme de segments de tubes cylindriques.

27. Mangeoire selon l'une quelconque ou plusieurs des revendications 1 à 26,
**caractérisée en ce que**
les segments de fermeture (35) présentent à chaque fois un bord inférieur de segment de fermeture (42) s'étendant dans la direction périphérique et de préférence horizontal.

28. Mangeoire selon l'une quelconque ou plusieurs des revendications 1 à 27,
**caractérisée en ce que**
les segments de fermeture (35) présentent à chaque fois un bord supérieur de segment de fermeture (43) s'étendant dans la direction périphérique et de préférence horizontal ou un bord supérieur de segment de fermeture (43) s'étendant dans la direction périphérique et orienté coniquement.

29. Mangeoire selon l'une quelconque ou plusieurs des revendications 1 à 28,
**caractérisée en ce que**
les segments de fermeture (35) présentent à chaque fois deux bords latéraux de segments de fermeture (41) s'étendant radialement, et de préférence radialement vers l'intérieur.

30. Mangeoire selon l'une quelconque ou plusieurs des revendications 1 à 29,
**caractérisée en ce que**
le rayon extérieur des segments de fermeture (35) correspond au rayon extérieur du tube de guidage de trémie inférieur (17) et le rayon intérieur des segments de fermeture (35) correspond de préférence au rayon intérieur du tube de guidage de trémie inférieur (17).

31. Mangeoire selon l'une quelconque ou plusieurs des revendications 27 à 30,
**caractérisée en ce que**
les segments de fermeture (35), avec leurs bords inférieurs de segments de fermeture (42), se terminent en affleurement avec une extrémité inférieure des structures de guidage (34a, 34b).

32. Mangeoire selon l'une quelconque ou plusieurs des revendications 29 à 31,
**caractérisée en ce que**
les segments de fermeture (35), avec leurs bords latéraux de segments de fermeture (41), se terminent en affleurement avec les bords de guidage latéraux des structures (38a, 38b) ou **en ce que** les segments de fermeture (35) avec leurs bords latéraux de segments de fermeture (41) ne se terminent pas en affleurement avec les bords de guidage latéraux des structures (38a, 38b) mais sont décalés par rapport à ceux-ci.

33. Mangeoire selon l'une quelconque ou plusieurs des revendications 28 à 32,
**caractérisée en ce que**
la distance verticale des bords inférieurs des segments de fermeture (42) aux bords supérieurs des segments de fermeture (43) correspond au moins à la distance des bords inférieurs des fenêtres (25) aux bords supérieurs des fenêtres (26).

34. Mangeoire selon l'une quelconque ou plusieurs des revendications 1 à 33,
**caractérisée en ce que**
les ouvertures supérieures d'apport en aliments (45) sont des fentes s'étendant dans la direction périphérique, l'étendue dans la direction périphérique des segments de fermeture (35) correspondant avantageusement à l'étendue des fenêtres d'apport en aliments (20) dans la direction périphérique et de préférence le nombre des segments de fermeture (35) correspondant au nombre des fenêtres d'apport en aliments (20).

35. Mangeoire selon l'une quelconque ou plusieurs des revendications 28 à 34,
**caractérisée en ce que**
les ouvertures d'apport en aliments (45) présentent des bords inférieurs d'ouvertures d'apport (43a), qui correspondent aux bords supérieurs (43) des segments de fermeture.

36. Mangeoire selon l'une quelconque ou plusieurs des revendications 1 à 35,
**caractérisée en ce que**
les ouvertures d'apport en aliments (45) présentent des bords supérieurs (46) d'ouvertures d'apport s'étendant dans la direction périphérique, qui sont formés de manière appropriée par le bord inférieur des nervures du tube de descente (70), ou **en ce que** les bords supérieurs (46) des ouvertures d'apport s'étendent sous forme d'arc, radialement vers l'intérieur et vers le haut dans le cône de transition du tube de descente (31), l'extrémité supérieure des bords supérieurs (46) des ouvertures d'apport étant de préférence disposée dans une région de transition du cône de transition du tube de descente (31) au tube de guidage du tube de descente (30).

37. Mangeoire selon l'une quelconque ou plusieurs des revendications 20 à 36,
**caractérisée en ce que**
les ouvertures d'apport en aliments (45) sont limitées latéralement par les structures de guidage (34a, 34b).

38. Mangeoire selon la revendication 36 et/ou 37,
**caractérisée en ce que**
les bords supérieurs (46) des ouvertures d'apport et les bords inférieurs (43a) des ouvertures d'apport sont espacés les uns des autres verticalement de la même distance que les bords supérieurs des fenêtres (25) sont espacés des bords inférieurs des fenêtres (26).

39. Mangeoire selon l'une quelconque ou plusieurs des revendications 1 à 38,
**caractérisée en ce que**
les ouvertures d'apport en aliments (45) sont réparties uniformément sur la périphérie de la région d'apport en aliments du tube de descente (32), le nombre des ouvertures d'apport en aliments (45) correspondant au nombre des fenêtres d'apport en aliments supérieures (20).

40. Mangeoire selon l'une quelconque ou plusieurs des revendications 36 à 39,
**caractérisée en ce que**
les bords inférieurs des ouvertures d'apport (43a) sont disposés, par rapport aux bords supérieurs des ouvertures d'apport (46), radialement vers l'extérieur, et notamment de manière décalée de l'épaisseur de paroi de la trémie de mangeoire (3).

41. Mangeoire selon l'une quelconque ou plusieurs des revendications 1 à 40,
**caractérisée en ce que**
le mécanisme de barres spatiales (5) présente une barre médiane centrale (50) orientée verticalement vers le bas, avec un axe de barre médiane (51) et plusieurs barres de support (52), de préférence quatre, s'étendant depuis la barre médiane (50) essentiellement radialement vers l'extérieur et vers le bas, disposées en croix, qui sont disposées de manière uniforme tout autour de la barre médiane (50), le nombre des barres de support (52) correspondant de préférence au nombre des nervures (22) formées entre les fenêtres d'apport en aliments supérieures (20).

42. Mangeoire selon la revendication 41,
**caractérisée en ce que**
la barre médiane (50) présente, à son extrémité inférieure, au moins un, de préférence de 1 à 5, préférablement de 2 à 4 alésages traversants (54) disposés perpendiculairement à l'axe de la barre médiane (51).

43. Mangeoire selon la revendication 41 et/ou 42,
**caractérisée en ce que**
les barres de support (52) présentent, à l'extérieur, du côté de l'extrémité, des blocs de guidage (55) de préférence essentiellement en forme de segments de parois cylindriques, dont les parois extérieures de blocs de guidage (56) sont pourvues de manière appropriée à chaque fois d'au moins une rainure de centrage (57) orientée verticalement, correspondant à la rainure de centrage (23) de la trémie de mangeoire (3), et de manière appropriée d'au moins une rainure d'encliquetage (58) orientée horizontalement, correspondant au nez d'encliquetage (24) de la trémie de mangeoire (3), le rayon des parois extérieures des blocs de guidage (56) correspondant de manière appropriée au rayon intérieur du tube de guidage de trémie inférieur (17) ou aux parois intérieures des nervures (22a), et l'étendue des parois extérieures des blocs de guidage (56) dans la direction périphérique correspondant de manière appropriée à l'étendue des nez d'encliquetage (24) de la trémie de mangeoire (3) dans la direction périphérique.

44. Mangeoire selon la revendication 43,
**caractérisée en ce que**
les blocs de guidage (55) présentent à chaque fois des bords de guidage latéraux de blocs (60a, 60b) orientés de chaque côté verticalement et de préférence radialement vers l'intérieur.

45. Mangeoire selon la revendication 43 et/ou 44,
**caractérisée en ce que**
les blocs de guidage (55) présentent à chaque fois des retraits étagés (59) de chaque côté, essentiellement à angle droit, s'étendant verticalement, de sorte qu'il se forme ainsi des bords de guidage extérieurs des blocs (61a, 61b) du côté extérieur, s'étendant verticalement et de manière appropriée dans la direction périphérique, le rayon des bords de guidage extérieurs des blocs (61a, 61b) correspondant de préférence au rayon des bords de guidage intérieurs des structures (39).

46. Mangeoire selon la revendication 44 et/ou 45,
**caractérisée en ce que**
la distance des bords de guidage latéraux des blocs (60a, 60b) dans la direction périphérique correspond à la distance des bords de guidage latéraux des structures (38a, 38b) dans la direction périphérique.

47. Mangeoire selon l'une quelconque ou plusieurs des revendications 1 à 46,
**caractérisée en ce que**
le mécanisme de barres spatiales (5) se compose d'un plastique, de préférence d'un plastique dur, par exemple du polyoxyméthylène (POM) et/ou est fabriqué par moulage, de préférence par moulage sous pression ou par moulage par injection.

48. Mangeoire selon l'une quelconque ou plusieurs des revendications 1 à 47,
**caractérisée en ce que**
le mécanisme de barres spatiales (5) est relié à la coque formant fond (2) de manière librement rotative, non déplaçable horizontalement en translation et de préférence déplaçable verticalement en translation autour de l'axe médian de la mangeoire (102).

49. Mangeoire selon l'une quelconque ou plusieurs des revendications 1 à 48,
**caractérisée en ce que**
la trémie de mangeoire (3) est reliée par le biais du mécanisme de barres spatiales (5) à la coque formant fond (2), de manière non déplaçable verticalement et horizontalement en translation et de préférence de manière librement rotative autour de l'axe médian de la mangeoire (102).

50. Mangeoire selon l'une quelconque ou plusieurs des revendications 41 à 49,
**caractérisée en ce que**
la barre médiane (50) est disposée dans la douille de réception (13) de la coque formant fond (2) de telle sorte que l'axe de la barre médiane (51) coïncide avec l'axe médian de la mangeoire (102).

51. Mangeoire selon l'une quelconque ou plusieurs des revendications 43 à 50,
**caractérisée en ce que**
les barres de support (52) sont disposées avec leurs rainures de centrage (57) dans les bords de centrage correspondants (23) de la trémie de mangeoire (3).

52. Mangeoire selon l'une quelconque ou plusieurs des revendications 43 à 51,
**caractérisée en ce que**
les barres de support (52) avec leurs nez d'encliquetage (58) sont encliquetées dans les nez d'encliquetage (24) de la trémie de mangeoire (3).

53. Mangeoire selon l'une quelconque ou plusieurs des revendications 43 à 52,
**caractérisée en ce que**
les parois extérieures des blocs de guidage (56) s'appliquent contre les parois intérieures des nervures (22a) et de préférence les bords de guidage latéraux des blocs (60a, 60b) sont disposés radialement en affleurement avec les bords latéraux des fenêtres (27).

54. Mangeoire selon l'une quelconque ou plusieurs des revendications 43 à 53,
**caractérisée en ce que**
le tube de descente (4) est monté avec ses structures de guidage appariées (34a, 34b) sur les blocs de guidage (55) du mécanisme de barres spatiales, de manière déplaçable verticalement en translation par rapport à celui-ci.

55. Mangeoire selon la revendication 54,
**caractérisée en ce que**
les bords de guidage latéraux des structures (38a, 38b) s'appliquent contre les bords de guidage latéraux des blocs (60a, 60b).

56. Mangeoire selon la revendication 54 et/ou 55,
**caractérisée en ce que**
les bords de guidage intérieurs des structures (39) s'appliquent contre les bords de guidage extérieurs des blocs (61a, 61b).

57. Mangeoire selon l'une quelconque ou plusieurs des revendications 54 à 56,
**caractérisée en ce que**
les bords de guidage extérieurs des structures (36) s'appliquent latéralement aux nez d'encliquetage (24) contre les parois intérieures des nervures (22a), en particulier par engagement par coopération de forme.

58. Mangeoire selon l'une quelconque ou plusieurs des revendications 24 à 57,
**caractérisée en ce que**
dans la position inférieure du tube de descente, les chanfreins (40) des structures de guidage (34a, 34b) et de préférence les bords inférieurs des segments de fermeture (42) reposent sur la surface de paroi de fond (8) du cône de glissement (11).

59. Mangeoire selon l'une quelconque ou plusieurs des revendications 9 à 58,
**caractérisée en ce que**
dans la position inférieure du tube de descente (4), les ailettes à soc (19) sont complètement recouvertes par les aliments (100).

60. Mangeoire selon l'une quelconque ou plusieurs des revendications 28 à 59,
**caractérisée en ce que**
dans la position supérieure du tube de descente, les bords supérieurs des segments de fermeture (43) s'appliquent contre les bords supérieurs des fenêtres (26), notamment par engagement par coopération de forme.

61. Mangeoire selon l'une quelconque ou plusieurs des revendications 29 à 60,
**caractérisée en ce que**
dans la position supérieure du tube de descente (4), les bords latéraux des segments de fermeture (41) s'appliquent contre les bords latéraux des fenêtres (27), notamment par engagement par coopération de forme.

62. Mangeoire selon l'une quelconque ou plusieurs des revendications 27 à 61,
**caractérisée en ce que**
dans la position supérieure du tube de descente (4), les bords inférieurs des segments de fermeture (46) sont disposés approximativement à la hauteur des bords inférieurs des fenêtres (25), de sorte que les segments de fermeture (35) s'appliquent avec leurs parois extérieures de segments de fermeture (73) contre les bords inférieurs des fenêtres (25).

63. Mangeoire selon l'une quelconque ou plusieurs des revendications 1 à 62,
**caractérisée en ce que**
dans la position supérieure du tube de descente (4) est formé un niveau d'aliments (79) conique qui s'étend de manière avantageuse approximativement jusqu'à un bord d'alimentation (12).
